# EUROPEAN PATENT APPLICATION

(11) **EP 3 628 705 A1**
(43) Date of publication of application: **01.04.2020**
(21) Application number: 18197731.5
(22) Date of filing: 28.09.2018
(51) Int. Cl.: C09C 1/02, C09C 3/08, C09C 3/00, C09C 3/04, C08K 9/04

(54) **PROCESS FOR PREPARING A COARSE SURFACE TREATED FILLER MATERIAL PRODUCT**

(71) Applicant: Omya International AG, 4665 Oftringen (CH)
(72) Inventor: BLANCHARD, PIERRE, 01 600 Reyrieux (FR); MICHEL, Eduard, 79418 Schliengen (DE); GOUTARD, Emmanuel, 84170 Monteux (FR)
(74) Representative: Glas, Holger

(57) **Abstract**

The present invention relates to a process for preparing a surface treated filler material product, the surface treated filler material product as well as an article comprising the surface treated filler material product.

## Description

The present invention relates to a process for preparing a surface treated filler material product, the surface treated filler material product as well as an article comprising the surface treated filler material product.

In practice, filler materials and especially calcium carbonate-containing filler materials are often used as particulate fillers in polymeric articles usually made of polyethylene (PE), polypropylene (PP), polyurethane (PU), polyvinylchloride (PVC), polyester (PES) and/or polyamide (PA). However, additives are introduced to provide the filler material with a coating and to improve the dispersion of said mineral filler material in the polymer matrix of polymer compositions as well as possibly to improve the processability of this polymer composition and/or properties of the final polymeric article. An elimination of such additives would unacceptably reduce the resulting quality of the polymeric article.

In the art, several attempts have been made to improve the applicability of filler materials and especially calcium carbonate-containing filler materials, e.g. by treating such filler materials with surface treatment agents. For instance, WO 00/20336 relates to an ultrafine natural calcium carbonate, which may optionally be treated with one or several fatty acids or one or several salts or mixtures thereof, and which is used as a rheology regulator for polymer compositions.

Likewise, US 4,407,986 relates to a precipitated calcium carbonate that is surface-treated with a dispersant that may include higher aliphatic acids and their metal salts in order to limit the addition of lubricant additives when kneading this calcium carbonate with crystalline polypropylene and to avoid the formation of calcium carbonate aggregates that limit the impact strength of the polypropylene.

EP 0 998 522 relates to surface treated calcium carbonate filler for breathable films using fatty acids of at least 10 carbon atoms wherein the filler before and after the treatment process has to be mostly free of moisture in the range of below 0.1 wt.-%.

DeArmitt et al., Improved thermoplastic composites by optimised surface treatment of the mineral fillers, Institute for Surface Chemistry, August 2000, describes a wet treatment process in which a batch suspension comprising a mineral filler material is contacted with a dispersant at room temperature for one hour. However, such wet treatment process has the disadvantage that the wetting of a dry product for treatment and the subsequent drying is energy- and cost-consuming.

In EP 0 325 114, relating to non-sagging underseal compositions for motor vehicles based on polyvinyl chloride which has improved rheological and adhesion properties, Example 7 discloses a mixture of an ammonium salt of 12-hydroxystearic acid in combination with a fatty acid (in a weight ratio of 1:1) used to treat a mineral filler.

WO 03/082966 relates to a cross-linkable and/or cross-linked nanofiller composition which, in optional embodiments, may additionally include fillers that may or may not be coated with stearic acid, stearate, silane, siloxane and/or titanate. Such nanofiller compositions are used to increase barrier properties, strength and heat distortion temperatures, making them useful in medical, automotive, electrical, construction and food application.

US 2002/0102404 describes dispersible calcium carbonate particles coated on their surface with a combination of saturated and unsaturated aliphatic carboxylic acids and salts thereof along with an organic compound such as a phthalic ester, which are used in adhesive compositions to improve viscosity stability and adhesion properties. Moreover, US 2002/0102404 requires the implementation of a mixture of saturated and unsaturated aliphatic carboxylic acids/salts. The presence of unsaturated aliphatic carboxylic acids/salts increases the risk of unwanted in situ side reactions with the double bond during processing of any unsaturated aliphatic carboxylic acid/salt-comprising material. Additionally, the presence of unsaturated aliphatic carboxylic acids/salts may result in discoloration of, or unwanted odour development, and notably rancid odours, in the material in which they are implemented.

Claim 11 of WO 92/02587 indicates that a saponified sodium salt solution of at least one high molecular weight unsaturated fatty acid or combination of at least one high molecular weight unsaturated fatty acid and at least one high molecular weight unsaturated fatty acid, may be added to a pre-heated slurry of precipitated calcium carbonate, to ultimately produce a desired level of fatty acid coating on the calcium carbonate before proceeding with further process steps.

The abstract of JP54162746 discloses a composition comprising given relative amounts of rigid vinyl chloride resin, fatty acid treated-colloidal calcium carbonate, and barium stearate used in order to improve the heat stability of the vinyl chloride composition.

US 4,520,073 describes mineral filler materials with improved hydrophobic coatings prepared by pressure coating of porous minerals using steam as a carrier for the coating material. Said coating material may be selected, among other options, from long chain aliphatic fatty acids and their salts.

WO 01/32787 describes a particulate alkaline earth metal carbonate material product which has on its particles a coating of hydrophobic material comprising a composition formed of (a) a first component which comprises the reaction product of the alkaline earth metal carbonate and at least one given aliphatic carboxylic acid and (b) a second component having a carbonate release temperature substantially higher than the first component comprises a compound of formula CH₃(CH₂)ₘCOOR.

WO 2008/077156 A2 relates to spunlaid fibers comprising at least one polymeric resin and at least one filler having an average particle size of less than or equal to about 5 microns and/or having a top cut of less than about 15 microns, wherein the at least one filler is present in an amount of less than about 40% by weight, relative to the total weight of the spunlaid fibers. The coating of the filler is described as being at least one organic material chosen from fatty acids and salts and esters thereof, e.g. stearic acid, stearate, ammonium stearate and calcium stearate.

GB 2 336 366 A relates to filled thermoplastic compositions, and, in particular, filled low density polyethylene compositions which are to be formed into products or articles by the process of extrusion. It is further described that the hydrophobising agent is preferably an organic carboxylic acid or partially or fully neutralised salt thereof which has at least one saturated or unsaturated hydrocarbon chain having from 8 to 28 carbon atoms, if the particulate mineral filler has a neutral to alkaline surface reaction, for example calcium carbonate.

EP2159258A1 relates to a treated mineral filler product comprising: a) at least one mineral filler; b) a treatment layer located on the surface of said mineral filler(s), said treatment layer comprising: at least one saturated C8 to C24 aliphatic carboxylic acid; and at least one di and/or trivalent cation salt of one or more saturated C8 to C24 aliphatic carboxylic acid; characterised in that: the weight ratio of all of said aliphatic carboxylic acid salt(s) : all of said aliphatic carboxylic acid(s) is from 51:49 to 75:25; and said treatment layer is present in an amount of at least 2.5 mg/m² of said mineral filler.

EP1980588A1 relates to a process for the preparation of a treated mineral filler product comprises the following steps: (a) treating at least one dry mineral filler with at least one Group II or Group III salt of a C8 to C24 aliphatic monocarboxylic acid to produce an intermediate mineral filler product; followed by (b) treating the intermediate mineral filler product of step (a) with at least one C8 to C24 aliphatic monocarboxylic acid to produce a treated mineral filler product.

WO 2016/023937 A1 refers to a process for producing a breathable film comprising the steps of: a) providing a composition comprising at least one thermoplastic polymer and a surface-treated filler material product, and b) forming a film from the composition of step a), and c) stretching the film obtained in step b) into at least one direction, wherein the surface-treated filler material product comprises A) at least one ground calcium carbonate-comprising filler material having a weight median particle size *d*₅₀ in the range from 0.1 µm to 7 µm, a top cut particle size of < 15 µm, a specific surface area (BET) from 0.5 to 150 m²/g, as measured using nitrogen and the BET method according to ISO 9277, and a residual total moisture content of < 1 wt.-%, based on the total dry weight of the at least one ground calcium carbonate-comprising filler material, and B) a treatment layer on the surface of the at least one wet ground calcium carbonate-comprising filler material comprising at least one mono-substituted succinic anhydride and/or at least one mono-substituted succinic acid and/or salty reaction product(s) thereof, wherein the surface-treated filler material product comprises the treatment layer in an amount of from 0.1 to 3 wt.-%, based on the total dry weight of the at least one ground calcium carbonate-comprising filler material.

However, the standard treatment for calcium carbonate-comprising filler materials comprises the application of fatty acids on fine particles. Due to the high melting point of the fatty acids and the fineness of the filler material, this treatment requires a sophisticated and expensive process. For specific application such as in the field of polymers, one trend is towards coarser particles. However, the costs for a standard treatment of coarse particles with fatty acids are too high and not accepted by the market such that surface treated coarse filler materials are rarely found. Furthermore, in current surface treatment processes the coarse feed material undergoes a size reduction due to mechanical abrasion caused by the spinning/coating process in the used equipment resulting in the production of a non neglectable amount of and unwanted fines.

Accordingly, it is an objective of the present invention to provide a process for preparing a coarse surface treated filler material product. Furthermore, it is desirable to provide a process for preparing a surface treated filler material product which does not result in the production of excessive amounts of fines. In addition thereto, it is desirable to provide a process for preparing a surface treated filler material product which does not affect the particle size distribution of the initial filler material. Further objectives can be gathered from the following description of the invention.

The foregoing and other objectives are solved by the subject-matter as defined herein in claim 1.

Advantageous embodiments of the inventive a process for preparing a surface treated filler material product are defined in the corresponding sub-claims.

According to one aspect of the present application, a process for preparing a surface treated filler material product is provided. The process for preparing a surface treated filler material product comprises at least the steps of:
a) providing at least one calcium carbonate-containing filler material having
   i) a volume median particle size *d*₅₀ value in the range from 5 to 100 µm,
   ii) a top cut (*d*₉₈) in the range from 30 to 500 µm, and
   iii) a residue on a 45 µm sieve measured according to ISO 787/7 of more than 0.5 wt.-%, based on the total weight of the calcium carbonate-containing filler material,
b) providing at least one surface treatment agent being in a molten or liquid state at a temperature ranging from 18 to 45°C,
c) contacting the surface of the at least one calcium carbonate-containing filler material of step a), under mixing, in one or more steps, with the at least one surface treatment agent of step b) such that a treatment layer comprising the at least one surface treatment agent and/or reaction product(s) thereof is formed on the surface of said at least one calcium carbonate-containing filler material of step a),
wherein the obtained surface treated filler material product has a residue on a 45 µm sieve measured according to ISO 787/7 of more than 0.5 wt.-%, based on the total weight of the surface treated filler material product.

The inventors surprisingly found out that the foregoing process for preparing a surface treated filler material product results in a coarse surface treated filler material product having a low amount of fines produced in the process. As a result, a coarse surface treated filler material product can be prepared that has essentially the particle size distribution of the initial filler material and is especially suitable for polymer applications.

According to one embodiment, the calcium carbonate-containing filler material of step a) is selected from the group consisting of ground calcium carbonate, preferably marble, limestone, dolomite and/or chalk, precipitated calcium carbonate (PCC), preferably vaterite, calcite and/or aragonite, surface-reacted calcium carbonate (MCC) and mixtures thereof, more preferably the calcium carbonate-containing filler material is ground calcium carbonate.

According to another embodiment, the at least one calcium carbonate-containing filler material of step a) has a) a volume median particle size *d*₅₀ value in the range from 6 to 80 µm, preferably from 7 to 60 µm and most preferably from 7.5 to 50 µm, b) a top cut (*d*₉₈) in the range from 40 and 400 µm, preferably from 50 to 300 µm, more preferably from 50 to 250 µm, and c) a residue on a 45 µm sieve measured according to ISO 787/7 in the range from 0.5 to 30 wt.-%, preferably in the range from 0.75 to 25 wt.-%, based on the total weight of the calcium carbonate-containing filler material.

According to yet another embodiment, the amount of the residue on a 45 µm sieve measured according to ISO 787/7 of the at least one calcium carbonate-containing filler material of step a) and the residue on a 45 µm sieve measured according to ISO 787/7 of the surface treated filler material product differs by less than 20 wt.-%.

According to one embodiment, the at least one surface treatment agent of step b) has a Brookfield viscosity of ≤ 1 000 mPa·s at 25°C.

According to another embodiment, the at least one surface treatment agent of step b) is a phosphoric acid ester blend of one or more phosphoric acid mono-ester and/or one or more phosphoric acid di-ester, and/or at least one mono-substituted succinic anhydride consisting of succinic anhydride mono-substituted with a group selected from a linear, branched and aliphatic group having a total amount of carbon atoms from at least C2 to C20 in the substituent or a cyclic group having a total amount of carbon atoms from at least C3 to C20 in the substituent; and/or is added in contacting step c) in a total amount of from 0.1 to 3 wt.-%, preferably of from 0.1 to 2 wt.-% and most preferably of from 0.1 to 1.5 wt.-%, based on the total dry weight of the at least one calcium carbonate-containing filler material of step a).

According to yet another embodiment, contacting step c) is carried out in that the overall energy intake by adding the at least one surface treatment agent of step b) to the at least one calcium carbonate-containing filler material of step a) is not more than 15 kWh/T, preferably in the range from 2 to 15 kWh/T.

According to one embodiment, contacting step c) is carried out in an Archimedean screw, e.g. a screw conveyer, a drum mixer, a pneumatic air conveyor system, a planetary mixer or a guedu mixer, preferably the at least one surface treatment agent of step b) is added to the at least one calcium carbonate-containing filler material of step a) which is loaded onto the Archimedean screw, e.g. screw conveyer, the drum mixer, the pneumatic air conveyor system, the planetary mixer or the guedu mixer.

According to another embodiment, the Archimedean screw is operated at an angle ranging from 30 to 80°, and more preferably from 35 to 70°, and/or a temperature ranging from 18 to 45°C.

According to yet another embodiment, the at least one surface treatment agent of step b) is added to the at least one calcium carbonate-containing filler material of step a) in the lower 1/3 of the Archimedean screw.

According to one embodiment, the drum mixer, planetary mixer or guedu mixer has a diameter to height ratio of 1:1 to 1:5.

According to another embodiment, contacting step c) is carried out in that the at least one surface treatment agent of step b) is sprayed onto the at least one calcium carbonate-containing filler material of step a), and/or contacting step c) is carried out in continuous or batch mode.

According to another aspect, the present invention refers to a surface treated filler material product comprising
a) at least one calcium carbonate-containing filler material having
   i) a volume median particle size *d*₅₀ value in the range from 5 to 100 µm,
   ii) a top cut (*d*₉₈) in the range from 30 and 500 µm,
b) a treatment layer on the surface of the at least one calcium carbonate-containing filler material comprising at least one surface treatment agent and/or reaction products thereof, wherein the surface treated filler material product comprises the treatment layer in an amount of from 0.1 to 3 wt.-%, based on the total dry weight of the at least one calcium carbonate-containing filler material,
wherein the surface treated filler material product has a residue on a 45 µm sieve measured according to ISO 787/7 of more than 0.5 wt.-%, based on the total weight of the surface treated filler material product.

According to one embodiment, the surface treated filler material product is obtained by a process for preparing a surface treated filler material product as defined herein.

According to a further aspect of the present invention, an article, preferably polymeric article, comprising the surface treated filler material product, as defined herein, is provided.

It should be understood that for the purposes of the present invention, the following terms have the following meanings:
For the purpose of the present invention, the term "surface treated filler material product" in the meaning of the present invention refers to a calcium carbonate-containing filler material which has been contacted with a surface treatment agent such as to obtain a coating layer on at least a part of the surface of the calcium carbonate-containing filler material.

The term "surface treatment agent", refers to an agent being suitable to render the calcium carbonate-containing filler material more hydrophobic.

The term "reaction products" of the surface treatment agent in the meaning of the present invention refers to products obtained by contacting a calcium carbonate-containing filler material with the surface treatment agent. Said reaction products are formed between the applied surface treatment agent and reactive molecules located at the surface of the calcium carbonate-containing filler material.

A "treatment layer" in the gist of the present invention refers to a layer, preferably a monolayer of a treatment agent on the surface of the surface treated filler material product. The "treatment layer" essentially consists of the surface treatment agent and/or reaction product(s) thereof.

The term "essentially" with regard to the treatment layer refers to a treatment layer that contains compounds differing from the surface treatment agent and/or reaction product(s) thereof in an amount of < 5 wt.-%, preferably < 2 wt.-% and most preferably < 1 wt.-%, based on the total weight of the treatment layer.

A "specific surface area (SSA)" of a calcium carbonate-containing filler material in the meaning of the present invention is defined as the surface area of the calcium carbonate-containing filler material divided by its mass. As used herein, the specific surface area is measured by nitrogen gas adsorption using the BET isotherm (ISO 9277:2010) and is specified in m²/g.

The "particle size" of particulate materials, for example the calcium carbonate-containing filler material herein, is described by its distribution of particle sizes *dₓ*. The value *dₓ* represents the diameter relative to which *x* % of the particles have diameters less than dx. This means that the *d*₉₈ value is the particle size at which 98 % of all particles are smaller. The *d*₉₈ value is also designated as "top cut". The dₓ values is given in volume percent. The *d*₅₀ value is thus the volume median particle size, i.e. 50 vol.% of all grains are smaller than this particle size. Volume median particle size *d*₅₀ was evaluated using a Malvern Mastersizer 2000 Laser Diffraction System. The *d*₅₀ or *d*₉₈ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The term "molten" in the meaning of the present invention is defined as the state in which a material is in a state from solid to liquid, i.e. is not entirely liquid at a temperature ranging from 18 to 45°C.

The term "liquid" according to the present invention refers to a material that is entirely liquid at a temperature ranging from 18 to 45°C.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

As set out above, the inventive process for preparing a surface treated filler material product comprises at least the process steps of a), b) and c). In the following, it is referred to further details of the present invention and especially the foregoing steps of the inventive process for preparing the surface treated filler material product.

### Characterization of step a): provision of at least one calcium carbonate-containing filler material

According to step a) of the process of the present invention, at least one calcium carbonate-containing filler material is provided.

The expression "at least one" calcium carbonate-containing filler material means that one or more, for example, two or three calcium carbonate-containing filler material may be provided. According to a preferred embodiment, only one calcium carbonate-containing filler material is provided in step a).

According to a preferred embodiment of the present invention the calcium carbonate-comprising material is selected from the group consisting of ground calcium carbonate (GCC), preferably marble, limestone, dolomite and/or chalk, precipitated calcium carbonate (PCC), preferably vaterite, calcite and/or aragonite, surface-reacted calcium carbonate (MCC) and mixtures thereof.

For example, the at least one calcium carbonate-comprising material is ground calcium carbonate.

GCC is understood to be a naturally occurring form of calcium carbonate, mined from sedimentary rocks such as limestone or chalk, or from metamorphic marble rocks and processed through a treatment such as grinding, screening and/or fractionizing in wet and/or dry form, for example by a cyclone or classifier. In one embodiment of the present invention, the GCC is selected from the group comprising marble, chalk, dolomite, limestone and mixtures thereof.

By contrast, calcium carbonate of the PCC type include synthetic calcium carbonate products obtained by carbonation of a slurry of calcium hydroxide, commonly referred to in the art as a slurry of lime or milk of lime when derived from finely divided calcium oxide particles in water or by precipitation out of an ionic salt solution. PCC may be rhombohedral and/or scalenohedral and/or aragonitic; preferred synthetic calcium carbonate or precipitated calcium carbonate comprising aragonitic, vateritic or calcitic mineralogical crystal forms or mixtures thereof.

"Surface-reacted calcium carbonate" in the meaning of the present invention may feature a natural ground or precipitated calcium carbonate with an internal structure modification or a surface-reaction product.

In one preferred embodiment, the at least one calcium carbonate-containing filler material is marble.

It is appreciated that the amount of calcium carbonate in the at least one calcium carbonate-containing filler material is preferably at least 80 wt.-%, e.g. at least 95 wt.-%, more preferably between 97 and 100 wt.-%, even more preferably between 98.5 and 99.95 wt.-%, based on the total dry weight of the at least one calcium carbonate-containing filler material.

The term "dry" calcium carbonate-containing filler material is understood to be a filler material having less than 0.3 % by weight of water relative to the filler material weight. The % water (equal to residual total moisture content) is determined according to the Coulometric Karl Fischer measurement method, wherein the filler material is heated to 220°C, and the water content released as vapour and isolated using a stream of nitrogen gas (at 100 ml/min) is determined in a Coulometric Karl Fischer unit.

It is a specific requirement of the present invention that the at least one calcium carbonate-containing filler material is a coarse material. That is to say, the at least one calcium carbonate-containing filler material has a volume median particle size *d*₅₀ value in the range from 5 to 100 µm. For example, the at least one calcium carbonate-containing filler material has a volume median particle size *d*₅₀ in the range from 6 to 80 µm, preferably from 7 to 60 µm and most preferably from 7.5 to 50 µm.

Additionally, the at least one calcium carbonate-containing filler material has a top cut (*d*₉₈) in the range from 30 to 500 µm. For example, the at least one calcium carbonate-containing filler material has a top cut (*d*₉₈) in the range from 40 and 400 µm, preferably from 50 to 300 µm, more preferably from 50 to 250 µm.

The coarse material is a material having a low amount of fines. In particular, the coarse at least one calcium carbonate-containing filler material is characterised by a residue on a 45 µm sieve measured according to ISO 787/7 of more than 0.5 wt.-%, based on the total weight of the calcium carbonate-containing filler material. Preferably, the at least one calcium carbonate-containing filler material has a residue on a 45 µm sieve measured according to ISO 787/7 in the range from 0.5 to 30 wt.-%, and more preferably in the range from 0.75 to 25 wt.-%, based on the total weight of the calcium carbonate-containing filler material. For example, the at least one calcium carbonate-containing filler material has a residue on a 45 µm sieve measured according to ISO 787/7 in the range from 0.75 to 15 wt.-%, or in the range from 0.75 to 10 wt.-%, based on the total weight of the calcium carbonate-containing filler material.

Thus, the at least one calcium carbonate-containing filler material has
i) a volume median particle size *d*₅₀ value in the range from 5 to 100 µm, preferably from 6 to 80 µm, more preferably from 7 to 60 µm and most preferably from 7.5 to 50 µm, and
ii) a top cut (*d*₉₈) in the range from 30 to 500 µm, preferably from 40 and 400 µm, more preferably from 50 to 300 µm, and most preferably from 50 to 250 µm, and
iii) a residue on a 45 µm sieve measured according to ISO 787/7 of more than 0.5 wt.-%, preferably from 0.5 to 30 wt.-%, and more preferably from 0.75 to 25 wt.-%, based on the total weight of the calcium carbonate-containing filler material.

In view of the above, it is appreciated that the at least one calcium carbonate-containing filler material is preferably in the form of a particulate material.

It is further preferred that the at least one calcium carbonate-containing filler material has a BET specific surface area of from 0.5 and 150 m²/g as measured by the BET nitrogen method. For example, the at least one calcium carbonate-containing filler material has a specific surface area (BET) of from 0.5 to 50 m²/g, more preferably of from 0.5 to 35 m²/g and most preferably of from 0.5 to 10 m²/g as measured by the BET nitrogen method.

It is preferred that the at least one calcium carbonate-containing filler material is a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case the at least one calcium carbonate-containing filler material is a wet ground calcium carbonate-containing filler material, the grinding step may be performed under conditions such that autogenous grinding takes place and/or by horizontal ball milling, and/or other such processes known to the skilled man. The wet processed ground calcium carbonate-containing filler material thus obtained may be washed and dewatered by well known processes, e.g. by flocculation, filtration or forced evaporation prior to drying. The subsequent step of drying may be carried out in a single step such as spray drying, or in at least two steps, e.g. by applying a first heating step to the calcium carbonate-containing filler material in order to reduce the associated moisture content to a level which is not greater than about 0.5 wt.-%, based on the total dry weight of the at least one calcium carbonate-containing filler material. The residual total moisture content of the filler can be measured by the Karl Fischer coulometric titration method, desorbing the moisture in an oven at 195°C and passing it continuously into the KF coulometer (Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the at least one calcium carbonate-containing filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the at least one calcium carbonate-containing filler material is subjected to a beneficiation step (such as a flotation, bleaching or magnetic separation step) to remove impurities.

In one embodiment of the present invention, the at least one calcium carbonate-containing filler material comprises a dry ground calcium carbonate-containing filler material. In another preferred embodiment, the at least one calcium carbonate-containing filler material is a material being wet ground in a horizontal ball mill, and subsequently dried by using the well known process of spray drying.

Depending on the at least one calcium carbonate-containing filler material, the at least one calcium carbonate-containing filler material preferably has a residual total moisture content of from 0.01 to 1 wt.-%, preferably from 0.01 to 0.2 wt.-%, more preferably from 0.02 to 0.2 wt.-% and most preferably from 0.04 to 0.2 wt.-%, based on the total dry weight of the at least one calcium carbonate-containing filler material.

For example, in case a wet ground and spray dried marble is used as the at least one calcium carbonate-containing filler material, the residual total moisture content of the at least one calcium carbonate-containing filler material is preferably of from 0.01 to 0.1 wt.-%, more preferably from 0.02 to 0.08 wt.-% and most preferably from 0.04 to 0.07 wt.-% based on the total dry weight of the at least one calcium carbonate-containing filler material. If a PCC is used as the at least one calcium carbonate-containing filler material, the residual total moisture content of the at least one calcium carbonate-containing filler material is preferably of from 0.01 to 0.2 wt.-%, more preferably from 0.05 to 0.17 wt.-% and most preferably from 0.05 to 0.15 wt.-%, based on the total dry weight of the at least one calcium carbonate-containing filler material.

### Characterization of step b): provision of at least one surface treatment agent

According to step b) of the process of the present invention at least one surface treatment agent being in a molten or liquid state at a temperature ranging from 18 to 45°C is provided.

It is appreciated that the expression "at least one" surface treatment agent means that one or more kinds of surface treatment agent may be provided in the process of the present invention.

Accordingly, it should be noted that the at least one surface treatment agent may be one kind of surface treatment agent. Alternatively, the at least one surface treatment agent may be a mixture of two or more kinds of surface treatment agents. For example, the at least one surface treatment agent may be a mixture of two or three kinds of surface treatment agents, like two kinds of surface treatment agents.

In one embodiment of the present invention, the at least one surface treatment agent is one kind of surface treatment agent.

In order to avoid a reduction in the particle size during the process, it is appreciated that the at least one surface treatment agent must be in a molten or liquid state at a temperature ranging from 18 to 45°C. That is to say, the at least one calcium carbonate-containing filler material is treated with at least one surface treatment agent being in a molten or liquid state.

The at least one surface treatment agent preferably features a viscosity of ≤ 1 000, preferably of ≤ 900 mPa·s, more preferably of ≤ 700 mPa·s and most preferably of ≤ 500 mPa·s at +25°C (± 2°C), when measured with the appropriate equipment e.g. Physica MCR 300 Rheometer (Paar Physica) equipped with the measuring cell TEZ 150 P-C and the CC 28.7 measuring system at a shear rate of 5 s⁻¹ and at +25°C (± 2°C).

It is to be noted that the at least one surface treatment agent may be also provided in an organic solvent such as to reach the above-mentioned viscosity. However, the organic solvent should feature a boiling point as low as possible in order to avoid energy consuming drying steps necessary for removing the organic solvent. For the same reasons, the at least one surface treatment agent should be dissolved in an amount of the organic solvent being as low as possible. The amount of the organic solvent is preferably below 50 wt.-%, more preferably below 30 wt.-% and most preferably below 10 wt.-%, based on the total weight of the mixture comprising the at least one surface treatment agent and organic solvent. The organic solvent may be selected from the group of solvents comprising ester and/or ether functions, aromatic solvents, mineral oil and mixtures thereof. Examples of organic solvents include diethyl ether, petroleum ether, ethyl acetate, toluene, xylene, and mixtures thereof.

However, the at least one surface treatment agent is preferably provided in undiluted form, i.e. without organic solvent.

It is appreciated that the at least one surface treatment agent can be any surface treatment agent known to the skilled person which is capable to form a hydrophobic treatment layer on at least a part of the accessible surface area of the at least one calcium carbonate-containing filler material particles.

In one embodiment of the present invention, the at least one surface treatment agent of step b) is a phosphoric acid ester blend of one or more phosphoric acid mono-ester and/or one or more phosphoric acid di-ester, and/or at least one mono-substituted succinic anhydride consisting of succinic anhydride mono-substituted with a group selected from a linear, branched and aliphatic group having a total amount of carbon atoms from at least C2 to C20 in the substituent or a cyclic group having a total amount of carbon atoms from at least C3 to C20 in the substituent.

Preferably, the at least one surface treatment agent of step b) is a phosphoric acid ester blend of one or more phosphoric acid mono-ester and/or one or more phosphoric acid di-ester, or at least one mono-substituted succinic anhydride consisting of succinic anhydride mono-substituted with a group selected from a linear, branched and aliphatic group having a total amount of carbon atoms from at least C2 to C20 in the substituent or a cyclic group having a total amount of carbon atoms from at least C3 to C20 in the substituent.

In one embodiment, the at least one surface treatment agent of step b) is a phosphoric acid ester blend of one or more phosphoric acid mono-ester and/or one or more phosphoric acid di-ester.

The term "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from C6 to C21, preferably from C8 to C20, more preferably from C8 to C18, and most preferably from C8 to C16 in the alcohol substituent.

The term "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from C6 to C21, preferably from C8 to C20, more preferably from C8 to C18, and most preferably from C8 to C16 in the alcohol substituent.

Alkyl esters of phosphoric acid are well known in the industry especially as surfactants, lubricants and antistatic agents (Die Tenside; Kosswig und Stache, Carl Hanser Verlag München, 1993).

The synthesis of alkyl esters of phosphoric acid by different methods and the surface treatment of minerals with alkyl esters of phosphoric acid are well known by the skilled man, e.g. from Pesticide Formulations and Application Systems: 15th Volume; Collins HM, Hall FR, Hopkinson M, STP1268; Published: 1996, US 3,897,519 A, US 4,921,990 A, US 4,350,645 A, US 6,710,199 B2, US 4,126,650 A, US 5,554,781 A, EP 1092000 B1 and WO 2008/023076 A1.

It is appreciated that the expression "one or more" phosphoric acid mono-ester means that one or more kinds of phosphoric acid mono-ester may be present in the phosphoric acid ester blend.

Accordingly, it should be noted that the one or more phosphoric acid mono-ester may be one kind of phosphoric acid mono-ester. Alternatively, the one or more phosphoric acid mono-ester may be a mixture of two or more kinds of phosphoric acid mono-ester. For example, the one or more phosphoric acid mono-ester may be a mixture of two or three kinds of phosphoric acid mono-ester, like two kinds of phosphoric acid mono-ester.

In one embodiment of the present invention, the one or more phosphoric acid mono-ester consists of an o-phosphoric acid molecule esterified with one alcohol selected from unsaturated or saturated, branched or linear, aliphatic or aromatic alcohols having a total amount of carbon atoms from C6 to C21 in the alcohol substituent. For example, the one or more phosphoric acid mono-ester consists of an o-phosphoric acid molecule esterified with one alcohol selected from unsaturated or saturated, branched or linear, aliphatic or aromatic alcohols having a total amount of carbon atoms from C8 to C20, more preferably from C8 to C18 and most preferably from C8 to C16 in the alcohol substituent.

In one embodiment of the present invention, the one or more phosphoric acid mono-ester consists of an o-phosphoric acid molecule esterified with one alcohol selected from saturated and linear or branched and aliphatic alcohols having a total amount of carbon atoms from C6 to C21 in the alcohol substituent. For example, the one or more phosphoric acid mono-ester consists of an o-phosphoric acid molecule esterified with one alcohol selected from saturated and linear or branched and aliphatic alcohols having a total amount of carbon atoms from C8 to C20, more preferably from C8 to C18 and most preferably from C8 to C16 in the alcohol substituent.

In one embodiment of the present invention, the one or more phosphoric acid mono-ester consists of an o-phosphoric acid molecule esterified with one alcohol selected from saturated and linear and aliphatic alcohols having a total amount of carbon atoms from C6 to C21, preferably from C8 to C20, more preferably from C8 to C18, and most preferably from C8 to C16 in the alcohol substituent. Alternatively, the one or more phosphoric acid mono-ester consists of an o-phosphoric acid molecule esterified with one alcohol selected from saturated and branched and aliphatic alcohols having a total amount of carbon atoms from C6 to C21, preferably from C8 to C20, more preferably from C8 to C18, and most preferably from C8 to C16 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, and mixtures thereof.

It is appreciated that the expression "one or more" phosphoric acid di-ester means that one or more kinds of phosphoric acid di-ester may be present in the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from unsaturated or saturated, branched or linear, aliphatic or aromatic alcohols having a total amount of carbon atoms from C6 to C21 in the alcohol substituent. For example, the one or more phosphoric acid di-ester consists of an o-phosphoric acid molecule esterified with two fatty alcohols selected from unsaturated or saturated, branched or linear, aliphatic or aromatic alcohols having a total amount of carbon atoms from C8 to C20, more preferably from C8 to C18 and most preferably from C8 to C16 in the alcohol substituent.

It is appreciated that the two alcohols used for esterifying the phosphoric acid may be independently selected from the same or different, unsaturated or saturated, branched or linear, aliphatic or aromatic alcohols having a total amount of carbon atoms from C6 to C21 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear or branched and aliphatic alcohols having a total amount of carbon atoms from C6 to C21 in the alcohol substituent. For example, the one or more phosphoric acid di-ester consists of an o-phosphoric acid molecule esterified with two alcohols selected from the same or different, saturated and linear or branched and aliphatic alcohols having a total amount of carbon atoms from C8 to C20, more preferably from C8 to C18 and most preferably from C8 to C16 in the alcohol substituent.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C21, preferably from C8 to C20, more preferably from C8 to C18, and most preferably from C8 to C16 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C21, preferably from C8 to C20, more preferably from C8 to C18, and most preferably from C8 to C16 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester and mixtures thereof.

For example, the one or more phosphoric acid di-ester is selected from the group comprising 2-ethylhexyl phosphoric acid di-ester, hexadecyl phosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester and mixtures thereof and the one or more phosphoric acid di-ester is selected from the group comprising 2-ethylhexyl phosphoric acid di-ester, hexadecyl phosphoric acid di-ester and mixtures thereof.

For example, the phosphoric acid ester blend comprises one phosphoric acid mono-ester and one phosphoric acid di-ester. In this case, the one phosphoric acid mono-ester is selected from the group comprising 2-ethylhexyl phosphoric acid mono-ester and hexadecyl phosphoric acid mono-ester, the one phosphoric acid di-ester is selected from the group comprising 2-ethylhexyl phosphoric acid di-ester and hexadecyl phosphoric acid di-ester.

If the phosphoric acid ester blend comprises one phosphoric acid mono-ester and and one phosphoric acid di-ester, it is appreciated that the alcohol substituent of the one phosphoric acid mono-ester and the one phosphoric acid di-ester are preferably the same. For example, the phosphoric acid ester blend comprises 2-ethylhexyl phosphoric acid mono-ester and 2-ethylhexyl phosphoric acid di-ester. Alternatively, the phosphoric acid ester blend comprises hexadecyl phosphoric acid mono-ester and hexadecyl phosphoric acid di-ester.

In one embodiment of the present invention, the phosphoric acid ester blend comprises two or more phosphoric acid mono-esters and two or more phosphoric acid di-esters. In this case, the two or more phosphoric acid mono-esters are selected from the group comprising 2-ethylhexyl phosphoric acid mono-ester and hexadecyl phosphoric acid mono-ester, the two or more phosphoric acid di-ester are selected from the group comprising 2-ethylhexyl phosphoric acid di-ester and hexadecyl phosphoric acid di-ester.

According to one embodiment of the present invention, the phosphoric acid ester blend comprises the one or more phosphoric acid mono-ester to the one or more phosphoric acid di-ester in a specific molar ratio. In particular, the molar ratio of the one or more phosphoric acid mono-ester to the one or more phosphoric acid di-ester in the phosphoric acid ester blend can be from 1:1 to 1:100.

The wording "molar ratio of the one or more phosphoric acid mono-ester to the one or more phosphoric acid di-ester" in the meaning of the present invention refers to the sum of the molecular weight of the phosphoric acid mono-ester molecules to the sum of the molecular weight of the phosphoric acid di-ester molecules.

According to one embodiment the molar ratio of the one or more phosphoric acid mono-ester to the one or more phosphoric acid di-ester in the phosphoric acid ester blend is from 1:1 to 1:100, preferably from 1:1.1 to 1:80, more preferably from 1:1.1 to 1:60, even more preferably from 1:1.1 to 1:40, still even more preferably from 1:1.1 to 1:20, and most preferably from 1:1.1 to 1:10.

According to one embodiment of the present invention,
I) the one or more phosphoric acid mono-ester consists of an o-phosphoric acid molecule mono-esterified with one alcohol molecule selected from unsaturated or saturated, branched or linear, aliphatic or aromatic alcohols having a total amount of carbon atoms from C6 to C21, preferably from C8 to C20, more preferably from C8 to C18, and most preferably from C8 to C16 in the alcohol substituent, and/or
II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C21, preferably from C8 to C20, more preferably from C8 to C18, and most preferably from C8 to C16 in the alcohol substituent.

In one embodiment of the present invention, the phosphoric acid ester blend further comprises one or more phosphoric acid tri-ester and/or phosphoric acid.

The term "phosphoric acid tri-ester" in the meaning of the present invention refers to an o-phosphoric acid molecule tri-esterified with three alcohol molecules selected from the same or different, unsaturated or saturated, branched or linear, aliphatic or aromatic alcohols having a total amount of carbon atoms from C6 to C21, preferably from C8 to C20, more preferably from C8 to C18, and most preferably from C8 to C16 in the alcohol substituent.

It is appreciated that the expression "one or more" phosphoric acid tri-ester means that one or more kinds of phosphoric acid tri-ester may be present in the phosphoric acid ester blend.

Accordingly, it should be noted that the one or more phosphoric acid tri-ester may be one kind of phosphoric acid tri-ester. Alternatively, the one or more phosphoric acid tri-ester may be a mixture of two or more kinds of phosphoric acid tri-ester. For example, the one or more phosphoric acid tri-ester may be a mixture of two or three kinds of phosphoric acid tri-ester, like two kinds of phosphoric acid tri-ester.

In one embodiment of the present invention, the one or more phosphoric acid tri-ester consists of an o-phosphoric acid molecule esterified with three alcohols selected from the same or different, unsaturated or saturated, branched or linear, aliphatic or aromatic alcohols having a total amount of carbon atoms from C6 to C21 in the alcohol substituent. For example, the one or more phosphoric acid tri-ester consists of an o-phosphoric acid molecule esterified with three alcohols selected from the same or different, unsaturated or saturated, branched or linear, aliphatic or aromatic fatty alcohols having a total amount of carbon atoms from C8 to C20, more preferably from C8 to C18 and most preferably from C8 to C16 in the alcohol substituent.

It is appreciated that the three alcohols used for esterifying the phosphoric acid may be independently selected from unsaturated or saturated, branched or linear, aliphatic or aromatic alcohols having a total amount of carbon atoms from C6 to C21 in the alcohol substituent. In other words, the one or more phosphoric acid tri-ester molecule may comprise three substituents being derived from the same alcohols or the phosphoric acid tri-ester molecule may comprise three substituents being derived from different alcohols.

In one embodiment of the present invention, the one or more phosphoric acid tri-ester consists of an o-phosphoric acid molecule esterified with three alcohols selected from the same or different, saturated and linear or branched and aliphatic alcohols having a total amount of carbon atoms from C6 to C21 in the alcohol substituent. For example, the one or more phosphoric acid tri-ester consists of an o-phosphoric acid molecule esterified with three alcohols selected from the same or different, saturated and linear or branched and aliphatic alcohols having a total amount of carbon atoms from C8 to C20, more preferably from C8 to C18 and most preferably from C8 to C16 in the alcohol substituent.

In one embodiment of the present invention, the one or more phosphoric acid tri-ester consists of an o-phosphoric acid molecule esterified with three alcohols selected from saturated and linear and aliphatic alcohols having a total amount of carbon atoms from C6 to C21, preferably from C8 to C20, more preferably from C8 to C18, and most preferably from C8 to C16 in the alcohol substituent. Alternatively, the one or more phosphoric acid tri-ester consists of an o-phosphoric acid molecule esterified with three alcohols selected from saturated and branched and aliphatic alcohols having a total amount of carbon atoms from C6 to C21, preferably from C8 to C20, more preferably from C8 to C18, and most preferably from C8 to C16 in the alcohol substituent.

In one embodiment of the present invention, the one or more phosphoric acid tri-ester is selected from the group comprising hexyl phosphoric acid tri-ester, heptyl phosphoric acid tri-ester, octyl phosphoric acid tri-ester, 2-ethylhexyl phosphoric acid tri-ester, nonyl phosphoric acid tri-ester, decyl phosphoric acid tri-ester, undecyl phosphoric acid tri-ester, dodecyl phosphoric acid tri-ester, tetradecyl phosphoric acid tri-ester, hexadecyl phosphoric acid tri-ester and mixtures thereof.

For example, the one or more phosphoric acid tri-ester is selected from the group comprising 2-ethylhexyl phosphoric acid tri-ester and hexadecyl phosphoric acid tri-ester, and mixtures thereof.

In one embodiment of the present invention, the phosphoric acid ester blend comprises one or more phosphoric acid mono-ester and one or more phosphoric acid di-ester and one or more phosphoric acid tri-ester and optionally phosphoric acid. For example, the phosphoric acid ester blend comprises one or more phosphoric acid mono-ester and one or more phosphoric acid di-ester and one or more phosphoric acid tri-ester and phosphoric acid.

Alternatively, the phosphoric acid ester blend comprises one or more phosphoric acid mono-ester and one or more phosphoric acid di-ester and optionally phosphoric acid. For example, the phosphoric acid ester blend comprises one or more phosphoric acid mono-ester and one or more phosphoric acid di-ester and phosphoric acid.

If the phosphoric acid ester blend comprises one or more phosphoric acid tri-ester, it is preferred that the phosphoric acid ester blend comprises the one or more phosphoric acid tri-ester in an amount of ≤ 10 mol.-%, based on the molar sum of the one or more phosphoric acid mono-ester and the one or more phosphoric acid di-ester and one or more phosphoric acid tri-ester and the phosphoric acid. For example, the phosphoric acid ester blend comprises the one or more phosphoric acid tri-ester in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and the one or more phosphoric acid di-ester and one or more phosphoric acid tri-ester and the phosphoric acid.

Additionally or alternatively, if the phosphoric acid ester blend comprises phosphoric acid, it is preferred that the phosphoric acid ester blend comprises the phosphoric acid in an amount of ≤ 10 mol.-%, based on the molar sum of the one or more phosphoric acid mono-ester and the one or more phosphoric acid di-ester and one or more phosphoric acid tri-ester and the phosphoric acid. For example, the phosphoric acid ester blend comprises the phosphoric acid in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and the one or more phosphoric acid di-ester and one or more phosphoric acid tri-ester and the phosphoric acid.

If the phosphoric acid ester blend further comprises phosphoric acid and one or more phosphoric acid tri-ester, it is thus preferred that the molar ratio of the phosphoric acid to the one or more phosphoric acid mono-ester to the one or more phosphoric acid di-ester to the one or more phosphoric acid tri-ester in the phosphoric acid ester blend is ≤ 10 mol.-% : ≤ 40 mol.-% : ≥ 40 mol.% : ≤ 10 mol.-%, based on the molar sum of the one or more phosphoric acid mono-ester and the one or more phosphoric acid di-ester and the one or more phosphoric acid tri-ester and the phosphoric acid.

The wording "molar ratio of the phosphoric acid to the one or more phosphoric acid mono-ester to the one or more phosphoric acid di-ester to the one or more phosphoric acid tri-ester" in the meaning of the present invention refers to the sum of the molecular weight of the phosphoric acid to the sum of the molecular weight of the phosphoric acid mono-ester molecules to the sum of the molecular weight of the phosphoric acid di-ester molecules to the sum of the molecular weight of the phosphoric acid tri-ester molecules.

Methods for preparing the surface-treated filler material product treated with at least one phosphoric acid ester blend and suitable compounds for coating are described e.g. in EP 2 770 017 A1, which is thus incorporated herewith by reference.

Additionally or alternatively, the at least one surface treatment agent of step b) is at least one mono-substituted succinic anhydride consisting of succinic anhydride mono-substituted with a group selected from a linear, branched, aliphatic and cyclic group having a total amount of carbon atoms from at least C2 to C20 in the substituent.

In one embodiment, the at least one surface treatment agent of step b) being at least one mono-substituted succinic anhydride is provided in a solvent, preferably organic solvent. Alternatively, the at least one surface treatment agent of step b) being at least one mono-substituted succinic anhydride is provided in water as solvent.

It is appreciated that the at least one mono-substituted succinic anhydride represents a surface treatment agent and consists of succinic anhydride mono-substituted with a group selected from any linear, branched, aliphatic and cyclic group having a total amount of carbon atoms from C2 to C20 in the substituent.

In one embodiment of the present invention, the at least one mono-substituted succinic anhydride consists of succinic anhydride mono-substituted with a group selected from a linear, branched, aliphatic and cyclic group having a total amount of carbon atoms from C3 to C20 in the substituent. For example, the at least one mono-substituted succinic anhydride consists of succinic anhydride mono-substituted with a group selected from a linear, branched, aliphatic and cyclic group having a total amount of carbon atoms from C4 to C20 in the substituent.

In one embodiment of the present invention, the at least one mono-substituted succinic anhydride consists of succinic anhydride mono-substituted with one group being a linear and aliphatic group having a total amount of carbon atoms from C2 to C20, preferably from C3 to C20 and most preferably from C4 to C20 in the substituent. Additionally or alternatively, the at least one mono-substituted succinic anhydride consists of succinic anhydride mono-substituted with one group being a branched and aliphatic group having a total amount of carbon atoms from C2 to C20, preferably from C3 to C20 and most preferably from C4 to C20 in the substituent.

Thus, it is preferred that the at least one mono-substituted succinic anhydride consists of succinic anhydride mono-substituted with one group being a linear or branched, alkyl group having a total amount of carbon atoms from C2 to C20, preferably from C3 to C20 and most preferably from C4 to C20 in the substituent.

For example, the at least one mono-substituted succinic anhydride consists of succinic anhydride mono-substituted with one group being a linear alkyl group having a total amount of carbon atoms from C2 to C20, preferably from C3 to C20 and most preferably from C4 to C20 in the substituent. Additionally or alternatively, the at least one mono-substituted succinic anhydride consists of succinic anhydride mono-substituted with one group being a branched alkyl group having a total amount of carbon atoms from C2 to C20, preferably from C3 to C20 and most preferably from C4 to C20 in the substituent.

The term "alkyl" in the meaning of the present invention refers to a linear or branched, saturated organic compound composed of carbon and hydrogen. In other words, "alkyl mono-substituted succinic anhydrides" are composed of linear or branched, saturated hydrocarbon chains containing a pendant succinic anhydride group.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Accordingly, it is appreciated that e.g. the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are iso-butylsuccinic anhydride, sec-butylsuccinic anhydride and/or tert-butylsuccinic anhydride.

Furthermore, it is appreciated that e.g. the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

In one embodiment of the present invention, the at least one mono-substituted succinic anhydride consists of succinic anhydride mono-substituted with one group being a linear or branched alkenyl group having a total amount of carbon atoms from C2 to C20, preferably from C3 to C20 and most preferably from C4 to C20 in the substituent.

The term "alkenyl" in the meaning of the present invention refers to a linear or branched, unsaturated organic compound composed of carbon and hydrogen. Said organic compound further contains at least one double bond in the substituent, preferably one double bond. In other words, "alkenyl mono-substituted succinic anhydrides" are composed of linear or branched, unsaturated hydrocarbon chains containing a pendant succinic anhydride group. It is appreciated that the term "alkenyl" in the meaning of the present invention includes the cis and trans isomers.

In one embodiment of the present invention, the at least one mono-substituted succinic anhydride is at least one linear or branched alkenyl mono-substituted succinic anhydride. For example, the at least one alkenyl mono-substituted succinic anhydride is selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

Accordingly, it is appreciated that e.g. the term "hexadecenyl succinic anhydride" comprises linear and branched hexadecenyl succinic anhydride(s). One specific example of linear hexadecenyl succinic anhydride(s) is n-hexadecenyl succinic anhydride such as 14-hexadecenyl succinic anhydride, 13-hexadecenyl succinic anhydride, 12-hexadecenyl succinic anhydride, 11-hexadecenyl succinic anhydride, 10-hexadecenyl succinic anhydride, 9-hexadecenyl succinic anhydride, 8-hexadecenyl succinic anhydride, 7-hexadecenyl succinic anhydride, 6-hexadecenyl succinic anhydride, 5-hexadecenyl succinic anhydride, 4-hexadecenyl succinic anhydride, 3-hexadecenyl succinic anhydride and/or 2-hexadecenyl succinic anhydride. Specific examples of branched hexadecenyl succinic anhydride(s) are 14-methyl-9-pentadecenyl succinic anhydride, 14-methyl-2-pentadecenyl succinic anhydride, 1-hexyl-2-decenyl succinic anhydride and/or iso-hexadecenyl succinic anhydride.

Furthermore, it is appreciated that e.g. the term "octadecenyl succinic anhydride" comprises linear and branched octadecenyl succinic anhydride(s). One specific example of linear octadecenyl succinic anhydride(s) is n-octadecenyl succinic anhydride such as 16-octadecenyl succinic anhydride, 15-octadecenyl succinic anhydride, 14-octadecenyl succinic anhydride, 13-octadecenyl succinic anhydride, 12-octadecenyl succinic anhydride, 11-octadecenyl succinic anhydride, 10-octadecenyl succinic anhydride, 9-octadecenyl succinic anhydride, 8-octadecenyl succinic anhydride, 7-octadecenyl succinic anhydride, 6-octadecenyl succinic anhydride, 5-octadecenyl succinic anhydride, 4-octadecenyl succinic anhydride, 3-octadecenyl succinic anhydride and/or 2-octadecenyl succinic anhydride. Specific examples of branched octadecenyl succinic anhydride(s) are 16-methyl-9-heptadecenyl succinic anhydride, 16-methyl-7-heptadecenyl succinic anhydride, 1-octyl-2-decenyl succinic anhydride and/or iso-octadecenyl succinic anhydride.

In one embodiment of the present invention, the at least one alkenyl mono-substituted succinic anhydride is selected from the group comprising hexenylsuccinic anhydride, octenylsuccinic anhydride, hexadecenyl succinic anhydride, octadecenyl succinic anhydride, and mixtures thereof.

In one embodiment of the present invention, the at least one mono-substituted succinic anhydride is one alkenyl mono-substituted succinic anhydride. For example, the one alkenyl mono-substituted succinic anhydride is hexenylsuccinic anhydride. Alternatively, the one alkenyl mono-substituted succinic anhydride is octenylsuccinic anhydride. Alternatively, the one alkenyl mono-substituted succinic anhydride is hexadecenyl succinic anhydride. For example, the one alkenyl mono-substituted succinic anhydride is linear hexadecenyl succinic anhydride such as n-hexadecenyl succinic anhydride or branched hexadecenyl succinic anhydride such as 1-hexyl-2-decenyl succinic anhydride. Alternatively, the one alkenyl mono-substituted succinic anhydride is octadecenyl succinic anhydride. For example, the one alkyl mono-substituted succinic anhydride is linear octadecenyl succinic anhydride such as n-octadecenyl succinic anhydride or branched octadecenyl succinic anhydride such iso-octadecenyl succinic anhydride, or 1-octyl-2-decenyl succinic anhydride.

In one embodiment of the present invention, the one alkenyl mono-substituted succinic anhydride is linear octadecenyl succinic anhydride such as n-octadecenyl succinic anhydride. In another embodiment of the present invention, the one alkenyl mono-substituted succinic anhydride is linear octenylsuccinic anhydride such as n-octenylsuccinic anhydride.

If the at least one mono-substituted succinic anhydride is one alkenyl mono-substituted succinic anhydride, it is appreciated that the one alkenyl mono-substituted succinic anhydride is present in an amount of ≥ 95 wt.-% and preferably of ≥ 96.5 wt.-%, based on the total weight of the at least one mono-substituted succinic anhydride provided in step b).

In one embodiment of the present invention, the at least one mono-substituted succinic anhydride is a mixture of two or more kinds of alkenyl mono-substituted succinic anhydrides. For example, the at least one mono-substituted succinic anhydride is a mixture of two or three kinds of alkenyl mono-substituted succinic anhydrides.

If the at least one mono-substituted succinic anhydride is a mixture of two or more kinds of alkenyl mono-substituted succinic anhydrides, one alkenyl mono-substituted succinic anhydride is linear or branched octadecenyl succinic anhydride, while each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. For example, the at least one mono-substituted succinic anhydride is a mixture of two or more kinds of alkenyl mono-substituted succinic anhydrides, wherein one alkenyl mono-substituted succinic anhydride is linear octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. Alternatively, the at least one mono-substituted succinic anhydride is a mixture of two or more kinds of alkenyl mono-substituted succinic anhydrides, wherein one alkenyl mono-substituted succinic anhydride is branched octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof.

For example, the at least one mono-substituted succinic anhydride is a mixture of two or more kinds of alkenyl mono-substituted succinic anhydrides comprising one or more hexadecenyl succinic anhydride, like linear or branched hexadecenyl succinic anhydride(s), and one or more octadecenyl succinic anhydride, like linear or branched octadecenyl succinic anhydride(s).

In one embodiment of the present invention, the at least one mono-substituted succinic anhydride is a mixture of two or more kinds of alkenyl mono-substituted succinic anhydrides comprising linear hexadecenyl succinic anhydride(s) and linear octadecenyl succinic anhydride(s). Alternatively, the at least one mono-substituted succinic anhydride is a mixture of two or more kinds of alkenyl mono-substituted succinic anhydrides comprising branched hexadecenyl succinic anhydride(s) and branched octadecenyl succinic anhydride(s). For example, the one or more hexadecenyl succinic anhydride is linear hexadecenyl succinic anhydride like n-hexadecenyl succinic anhydride and/or branched hexadecenyl succinic anhydride like 1-hexyl-2-decenyl succinic anhydride. Additionally or alternatively, the one or more octadecenyl succinic anhydride is linear octadecenyl succinic anhydride like n-octadecenyl succinic anhydride and/or branched octadecenyl succinic anhydride like iso-octadecenyl succinic anhydride and/or 1-octyl-2-decenyl succinic anhydride.

If the at least one mono-substituted succinic anhydride is a mixture of two or more kinds of alkenyl mono-substituted succinic anhydrides, it is appreciated that one alkenyl mono-substituted succinic anhydride is present in an amount of from 20 to 60 wt.-% and preferably of from 30 to 50 wt.-%, based on the total weight of the at least one mono-substituted succinic anhydride provided in step b).

For example, if the at least one mono-substituted succinic anhydride is a mixture of two or more kinds of alkenyl mono-substituted succinic anhydrides comprising one or more hexadecenyl succinic anhydride(s), like linear or branched hexadecenyl succinic anhydride(s), and one or more octadecenyl succinic anhydride(s), like linear or branched hexadecenyl succinic anhydride(s), it is preferred that the one or more octadecenyl succinic anhydride(s) is present in an amount of from 20 to 60 wt.-% and preferably of from 30 to 50 wt.-%, based on the total weight of the at least one mono-substituted succinic anhydride provided in step b).

It is also appreciated that the at least one mono-substituted succinic anhydride may be a mixture of at least one alkyl mono-substituted succinic anhydrides and at least one alkenyl mono-substituted succinic anhydrides.

If the at least one mono-substituted succinic anhydride is a mixture of at least one alkyl mono-substituted succinic anhydrides and at least one alkenyl mono-substituted succinic anhydrides, it is appreciated that the alkyl substituent of the of at least one alkyl mono-substituted succinic anhydrides and the alkenyl substituent of the of at least one alkenyl mono-substituted succinic anhydrides are preferably the same. For example, the at least one mono-substituted succinic anhydride is a mixture of ethylsuccinic anhydride and ethenylsuccinic anhydride. Alternatively, the at least one mono-substituted succinic anhydride is a mixture of propylsuccinic anhydride and propenylsuccinic anhydride. Alternatively, the at least one mono-substituted succinic anhydride is a mixture of butylsuccinic anhydride and butenylsuccinic anhydride. Alternatively, the at least one mono-substituted succinic anhydride is a mixture of triisobutyl succinic anhydride and triisobutenyl succinic anhydride. Alternatively, the at least one mono-substituted succinic anhydride is a mixture of pentylsuccinic anhydride and pentenylsuccinic anhydride. Alternatively, the at least one mono-substituted succinic anhydride is a mixture of hexylsuccinic anhydride and hexenylsuccinic anhydride. Alternatively, the at least one mono-substituted succinic anhydride is a mixture of heptylsuccinic anhydride and heptenylsuccinic anhydride. Alternatively, the at least one mono-substituted succinic anhydride is a mixture of octylsuccinic anhydride and octenylsuccinic anhydride. Alternatively, the at least one mono-substituted succinic anhydride is a mixture of nonylsuccinic anhydride and nonenylsuccinic anhydride. Alternatively, the at least one mono-substituted succinic anhydride is a mixture of decyl succinic anhydride and decenyl succinic anhydride. Alternatively, the at least one mono-substituted succinic anhydride is a mixture of dodecyl succinic anhydride and dodecenyl succinic anhydride. Alternatively, the at least one mono-substituted succinic anhydride is a mixture of hexadecanyl succinic anhydride and hexadecenyl succinic anhydride. For example, the at least one mono-substituted succinic anhydride is a mixture of linear hexadecanyl succinic anhydride and linear hexadecenyl succinic anhydride or a mixture of branched hexadecanyl succinic anhydride and branched hexadecenyl succinic anhydride. Alternatively, the at least one mono-substituted succinic anhydride is a mixture of octadecanyl succinic anhydride and octadecenyl succinic anhydride. For example, the at least one mono-substituted succinic anhydride is a mixture of linear octadecanyl succinic anhydride and linear octadecenyl succinic anhydride or a mixture of branched octadecanyl succinic anhydride and branched octadecenyl succinic anhydride.

In one embodiment of the present invention, the at least one mono-substituted succinic anhydride is a mixture of nonylsuccinic anhydride and nonenylsuccinic anhydride.

If the at least one mono-substituted succinic anhydride is a mixture of at least one alkyl mono-substituted succinic anhydrides and at least one alkenyl mono-substituted succinic anhydrides, the weight ratio between the at least one alkyl mono-substituted succinic anhydride and the at least one alkenyl mono-substituted succinic anhydride is between 90:10 and 10:90 (wt.-%/wt.-%). For example, the weight ratio between the at least one alkyl mono-substituted succinic anhydride and the at least one alkenyl mono-substituted succinic anhydride is between 70:30 and 30:70 (wt.-%/wt.-%) or between 60:40 and 40:60.

Optionally, the at least one mono-substituted succinic anhydride is provided in combination with at least one mono-substituted succinic acid in step b) of the inventive process.

It is appreciated that the expression "at least one" mono-substituted succinic acid means that one or more kinds of mono-substituted succinic acid may be provided in step b) of the process of the present invention.

Accordingly, it should be noted that the at least one mono-substituted succinic acid may be one kind of mono-substituted succinic acid. Alternatively, the at least one mono-substituted succinic acid may be a mixture of two or more kinds of mono-substituted succinic acid. For example, the at least one mono-substituted succinic acid may be a mixture of two or three kinds of mono-substituted succinic acid, like two kinds of mono-substituted succinic acid.

In one embodiment of the present invention, the at least one mono-substituted succinic acid is one kind of mono-substituted succinic acid.

It is appreciated that the at least one mono-substituted succinic acid represents a surface treatment agent and consists of succinic acid mono-substituted with a group selected from any linear, branched, aliphatic and cyclic group having a total amount of carbon atoms from C2 to C20 in the substituent.

In one embodiment of the present invention, the at least one mono-substituted succinic acid consists of succinic acid mono-substituted with a group selected from a linear, branched, aliphatic and cyclic group having a total amount of carbon atoms from C3 to C20 in the substituent. For example, the at least one mono-substituted succinic acid consists of succinic acid mono-substituted with a group selected from a linear, branched, aliphatic and cyclic group having a total amount of carbon atoms from C4 to C20 in the substituent.

If the at least one mono-substituted succinic anhydride is provided with at least one mono-substituted succinic acid in process step b), it is appreciated that the at least one mono-substituted succinic anhydride and the at least one mono-substituted succinic acid may comprise the same or different substituent.

In one embodiment of the present invention, the succinic acid molecule of the at least one mono-substituted succinic acid and the succinic anhydride molecule of the at least one mono-substituted succinic anhydride are mono-substituted with the same group selected from any linear, branched and aliphatic group having a total amount of carbon atoms from C2 to C20, preferably from C3 to C20 and most preferably from C4 to C20 in the substituent or a cyclic group having a total amount of carbon atoms from C3 to C20 and most preferably from C4 to C20 in the substituent.

If the at least one mono-substituted succinic anhydride is provided in combination with at least one mono-substituted succinic acid, the at least one mono-substituted succinic acid is present in an amount of ≤ 10 mol.-%, based on the molar sum of the at least one mono-substituted succinic anhydride and the at least one mono-substituted succinic acid. For example, the at least one mono-substituted succinic acid is present in an amount of ≤ 5 mol.-%, preferably of ≤ 2.5 mol.-% and most preferably of ≤ 1 mol.-%, based on the molar sum of the at least one mono-substituted succinic anhydride and the at least one mono-substituted succinic acid.

In one embodiment of the present invention, at least one mono-substituted succinic anhydride and at least one mono-substituted succinic acid are provided in process step b).

If the at least one mono-substituted succinic anhydride is provided in combination with the at least one mono-substituted succinic acid, the at least one mono-substituted succinic anhydride and the at least one mono-substituted succinic acid are preferably provided as a blend.

It is preferred that the at least one surface treatment agent of step b) is provided in a total amount of from 0.1 to 3 wt.-%, based on the total dry weight of the at least one calcium carbonate-containing filler material of step a).

For example, the at least one surface treatment agent of step b) is provided in a total amount of from 0.1 to 2 wt.-% and most preferably of from 0.1 to 1.5 wt.-%, based on the total dry weight of the at least one calcium carbonate-containing filler material of step a).

Additionally or alternatively, the at least one surface treatment agent of step b) is preferably provided in a quantity such that the total weight of said surface treatment agent on the surface of the at least one calcium carbonate-containing filler material is less than 35 mg/m² of the at least one calcium carbonate-containing filler material provided in step a).

In one embodiment of the present invention, the at least one surface treatment agent of step b) is preferably provided in a quantity such that the total weight of said surface treatment agent on the surface of the at least one calcium carbonate-containing filler material is less than 20 mg/m²,even more preferably less than 15 mg/m² and most preferably less than 5 mg/m² of the at least one calcium carbonate-containing filler material provided in step a).

For example, the at least one surface treatment agent of step b) is preferably provided in a quantity such that the total weight of said surface treatment agent on the surface of the at least one calcium carbonate-containing filler material is from 0.1 to 35 mg/m², more preferably from 0.2 to 20 mg/m², even more preferably from 0.5 to 15 mg /m²and most preferably from 0.1 to 5 mg/m² of the at least one calcium carbonate-containing filler material provided in step a).

### Characterization of step c): Contacting of the at least one calcium carbonate-containing filler material with the at least one surface treatment agent

According to step c) of the inventive process, the surface of the at least one calcium carbonate-containing filler material of step a) is contacted, under mixing, in one or more steps, in any order, with the at least one surface treatment agent of step b) such that a treatment layer comprising the at least one surface treatment agent and/or reaction product(s) thereof is formed on the surface of said at least one calcium carbonate-containing filler material of step a).

Step c) of contacting the at least one calcium carbonate-containing filler material with the at least surface treatment agent takes place under mild conditions. It is appreciated that mild conditions are required to decrease the amount of fines due to low abrasion such that the surface treated filler material product obtained by the process has essentially the same particle size distribution as the at least one calcium carbonate-containing filler material of step a) with a low amount of fines. This is especially achieved in that the overall energy intake is below the energy typically required by processes of the prior art. More precisely, it is preferred that contacting step c) is carried out in that the overall energy intake by adding the at least one surface treatment agent of step b) to the at least one calcium carbonate-containing filler material of step a) is not more than 15 kWh/T. For example, contacting step c) is carried out in that the overall energy intake by adding the at least one surface treatment agent of step b) to the at least one calcium carbonate-containing filler material of step a) is in the range from 2 to 15 kWh/T, e.g. from 2 to 10 kWh/T or from 2 to 8 kWh/T.

In one embodiment of the present invention, the inventive process, especially contacting step c), may be carried out in continuous mode. In this case, it is possible to contact the at least one calcium carbonate-containing filler material with the at least one surface treatment agent in a constant flow, so that a constant concentration of the at least one surface treatment agent is provided during step c).

Alternatively, the at least one calcium carbonate-containing filler material is contacted with the at least one surface treatment agent in one step, wherein said at least one surface treatment agent is preferably added in one portion.

In another embodiment of the present invention, the inventive process, especially contacting step c), may be carried out in batch mode, i.e. the at least one calcium carbonate-containing filler material is contacted with the at least one surface treatment agent in more than one step, wherein said at least one surface treatment agent is preferably added in about equal portions. Alternatively, it is also possible to add the at least one surface treatment agent in unequal portions to the at least one calcium carbonate-containing filler material, i.e. in larger and smaller portions.

It is appreciated that contacting step c) can be carried out in that the at least one surface treatment agent of step b) is added to the at least one calcium carbonate-containing filler material of step a).

Alternatively, the at least one calcium carbonate-containing filler material of step a) is added to the at least one surface treatment agent of step b).

It is appreciated that the advantageous effects are especially obtained if the at least one surface treatment agent of step b) is added to the at least one calcium carbonate-containing filler material of step a). For example, contacting step c) is carried out in that the at least one surface treatment agent of step b) is sprayed onto the at least one calcium carbonate-containing filler material of step a).

In order to achieve the low overall energy intake, it is appreciated that process step c) should be carried out without additional temperature intake, i.e. by heating or cooling. That is to say, contacting step c) is preferably carried out at the respective ambient temperature. Thus, contacting step c) is preferably carried out at a temperature ranging from 18 to 45°C.

In view of this, it is required that the at least one surface treatment agent features a workable viscosity in said temperature range, i.e. the at least one surface treatment agent should be in a molten or liquid state at a temperature ranging from 18 to 45°C, in order to achieve a sufficient surface treatment.

Thus, it is preferred that the temperature before and/or during contacting step c) is not adjusted such that the at least one surface treatment agent is in a molten or liquid state, i.e. the process is free of temperature adjustment steps before and/or during contacting step c).

The treatment time for carrying out contacting step c) is preferably for a period of 1 000 s or less, preferably for a period of 500 s or less, more preferably for a period of 250 s or less and most preferably from 0.1 to 1 000 s. For example, contacting step c) is carried out for a period of time from 0.1 to 20 s, preferably from 0.5 to 15 s and most preferably from 1 to 10 s.

Furthermore, it is appreciated that the overall energy intake can be reduced if contacting step c) is carried out in an Archimedean screw, e.g. a screw conveyer, a drum mixer, a pneumatic air conveyor system, a planetary mixer or a guedu mixer.

Such equipment is well known and the skilled person will adapt the applied conditions according to the equipment used.

However, it is preferred that the drum mixer, planetary mixer or guedu mixer has a diameter to height ratio of 1:1 to 1:5. It is further preferred that the drum mixer, planetary mixer or guedu mixer is operated at a temperature ranging from 18 to 45°C.

As regards the Archimedean screw, it is appreciated that the overall energy intake is especially low if the Archimedean screw is operated at a specific angle.

In one embodiment, the Archimedean screw is operated at an angle ranging from 0 to 80°, and more preferably from 0 to 70°. Preferably, the Archimedean screw is operated at an angle ranging from 30 to 80°, and more preferably from 35 to 70°.

If contacting step c) is carried out in one Archimedean screw, the Archimedean screw is preferably operated at an angle ranging from 30 to 80°, and more preferably from 35 to 70°.

In one embodiment, contacting step c) is carried out in two Archimedean screws. For example, a first Archimedean screw is operated at an angle ranging from 0 to 30°, and more preferably from 0 to 20° and the second Archimedean screw is operated at an angle ranging from 30 to 80°, and more preferably from 35 to 70°. In this embodiment, the first Archimedean screw is connected with the second Archimedean screw via a chute. That is to say, the content of the first Archimedean screw is preferably loaded via a chute onto the second Archimedean screw, i.e. the loading point on the second Archimedean screw is below the discharge point of the first Archimedean screw.

Furthermore, it is appreciated that the overall energy intake can be especially reduced if contacting step c) is carried out in that the at least one surface treatment agent of step b) is added to the at least one calcium carbonate-containing filler material of step a) in the lower 1/3 of the Archimedean screw.

For example, if contacting step c) is carried out in one Archimedean screw, the at least one surface treatment agent of step b) is preferably added to the at least one calcium carbonate-containing filler material of step a) in the lower 1/3 of the Archimedean screw being operated at an angle ranging from 30 to 80°, and more preferably from 35 to 70°.

If contacting step c) is carried out in two Archimedean screws, the at least one surface treatment agent of step b) is preferably added to the at least one calcium carbonate-containing filler material of step a) in the lower 1/3 of the first Archimedean screw being operated at an angle ranging from 0 to 30°, and more preferably from 0 to 20° and/or in the lower 1/3 of the second Archimedean screw being operated at an angle ranging from 30 to 80°, and more preferably from 35 to 70°. For example, the at least one surface treatment agent of step b) is preferably added to the at least one calcium carbonate-containing filler material of step a) in the lower 1/3 of the first Archimedean screw being operated at an angle ranging from 0 to 30°, and more preferably from 0 to 20° or in the lower 1/3 of the second Archimedean screw being operated at an angle ranging from 30 to 80°, and more preferably from 35 to 70°. Alternatively, the at least one surface treatment agent of step b) is preferably added to the at least one calcium carbonate-containing filler material of step a) in the lower 1/3 of the first Archimedean screw being operated at an angle ranging from 0 to 30°, and more preferably from 0 to 20° and in the lower 1/3 of the second Archimedean screw being operated at an angle ranging from 30 to 80°, and more preferably from 35 to 70°. In this embodiment, the at least one surface treatment agent of step b) is thus split in several potions, e.g. two portions, of equal or unequal amounts of the at least one surface treatment agent of step b).
It is further preferred that the Archimedean screw is operated at a temperature ranging from 18 to 45°C.

In view of the above, it is preferred that the at least one surface treatment agent of step b) is added to the at least one calcium carbonate-containing filler material of step a) which is loaded onto the Archimedean screw, e.g. screw conveyer, the drum mixer, the pneumatic air conveyor system, the planetary mixer or the guedu mixer.

It is appreciated that the at least one surface treatment agent is added in contacting step c) in a total amount of from 0.1 to 3 wt.-%, based on the total dry weight of the at least one calcium carbonate-containing filler material of step a). For example, the at least one surface treatment agent is added in contacting step d) in an amount of from 0.1 to 2 wt.-% or of from 0.1 to 1.5 wt.-%, based on the total dry weight of the at least one calcium carbonate-containing filler material of step a).

The obtained surface treated filler material product has a residue on a 45 µm sieve measured according to ISO 787/7 of more than 0.5 wt.-%, based on the total weight of the surface treated filler material product. Preferably, the obtained surface treated filler material product has a residue on a 45 µm sieve measured according to ISO 787/7 in the range from 0.5 to 30 wt.-%, and more preferably in the range from 0.75 to 25 wt.-%, based on the total weight of the surface treated filler material product. For example, the obtained surface treated filler material product has a residue on a 45 µm sieve measured according to ISO 787/7 in the range from 0.75 to 15 wt.-%, or in the range from 0.75 to 10 wt.-%, based on the total weight of the surface treated filler material product.

As already mentioned above, the process is characterized in that almost no abrasion is obtained due to the low energy intake and thus the obtained surface treated filler material product has almost the same particle size distribution as the at least one calcium carbonate-containing filler material of step a).

In view of this, it is preferred that the amount of the residue on a 45 µm sieve measured according to ISO 787/7 of the at least one calcium carbonate-containing filler material of step a) and the residue on a 45 µm sieve measured according to ISO 787/7 of the surface treated filler material product differs by less than 20 wt.-%. Preferably, the amount of the residue on a 45 µm sieve measured according to ISO 787/7 of the at least one calcium carbonate-containing filler material of step a) and the residue on a 45 µm sieve measured according to ISO 787/7 of the surface treated filler material product differs by less than 15 wt.-%, more preferably less than 10 wt.-%, even more preferably less than 5 wt.-%.

It is to be noted that the residue on a 45 µm sieve measured according to ISO 787/7 of the surface treated filler material product may be more or less than the amount of the residue on a 45 µm sieve measured according to ISO 787/7 of the at least one calcium carbonate-containing filler material of step a).

It is appreciated that the treatment layer formed on the surface of the at least one calcium carbonate-containing filler material comprises the at least one surface treatment agent provided in step b) and/or reaction product(s) thereof obtained as reaction product from contacting the calcium carbonate-containing filler material with the at least one surface treatment agent of step b). In such a case, the treatment layer of the surface treated filler material product preferably further comprises reaction product(s) of the at least one surface treatment agent formed on the surface of said at least one calcium carbonate-containing filler material in step c). For example, reaction product(s) such as one or more calcium salts and/or magnesium salts of the at least one surface treatment agent.

The treatment layer is preferably characterized in that the total weight of the at least one surface treatment agent and/or reaction product(s) thereof on the surface of the surface treated filler material is from 0.1 to 35 mg/m², more preferably from 0.2 to 20 mg/m² and most preferably from 0.5 to 15 mg /m² 0.1 to 5 mg/m² of the at least one calcium carbonate-comprising filler material.

The treatment layer is preferably characterized in that the total weight of the at least one surface treatment agent and/or reaction product(s) thereof on the surface of the surface treated filler material is from 0.1 to 2 wt.-%/m², more preferably from 0.2 to 1 wt.-%/m² and most preferably from 0.3 to 0.5 wt.-%/m² of the at least one calcium carbonate-comprising filler material.

It is further appreciated that the obtained surface treated filler material comprises the treatment layer in an amount of from 0.1 to 3 wt.-%, preferably in an amount of from 0.1 to 2 wt.-%, more preferably in an amount of from 0.2 to 4 wt.-%, and most preferably in an amount of from 0.1 to 1.5 wt.-% based on the total dry weight of the at least one calcium carbonate-comprising filler material.

Thus, it is appreciated that the at least one calcium carbonate-containing filler material product obtained in process step c) comprises, preferably consists of, at least one calcium carbonate-containing filler material and a treatment layer comprising the at least one surface treatment agent and/or reaction product(s) thereof. The treatment layer is formed on the surface of said at least one calcium carbonate-containing filler material of step a).

Additionally or alternatively, the treatment layer of the surface treated filler material product comprises the at least one surface treatment agent and/or reaction product(s) thereof in a specific molar ratio. For example, the molar ratio of the at least one surface treatment agent to the reaction product(s) thereof is from 99.9:0.1 to 0.1:99.9, preferably from 70:30 to 90:10.

The wording "molar ratio of the at least one surface treatment agent to the reaction product(s) thereof' in the meaning of the present invention refers to the sum of the molecular weight of the at least one surface treatment agent to the sum of the molecular weight of the surface treatment agent molecules in the reaction products thereof.

It is appreciated that the at least one calcium carbonate-containing filler material may comprise water or an organic solvent. In one embodiment, the surface treated filler material product thus obtained may be dried. This optional step is preferably carried out in order to reduce the water or organic solvent content of the surface treated filler material product obtained. Thus, the dried surface treated filler material product obtained has a moisture content that is below the moisture content of the surface treated filler material product obtained before the drying step, i.e. after step c).

According to one embodiment of the present invention, the method thus comprises a further step d) of drying the surface treated filler material product obtained in step c).

For example, optional drying step d) is carried out at a temperature in the range from 60 to 180°C, preferably from 50 to 150°C, more preferably from 60 to 120°C and most preferably from 80 to 120°C, at ambient or reduced pressure until the water or organic solvent content of the obtained surface treated filler material product obtained is reduced.

In one embodiment, optional drying step d) is carried out until the water or organic solvent content of the obtained surface treated filler material product is in the range from 0.001 to 20 wt.-%, preferably from 0.005 to 15 wt.-%, more preferably from 0.01 to 10 wt.-% and most preferably from 0.05 to 5 wt.-%, based on the total weight of the at least one calcium carbonate-containing filler material.

It is appreciated that optional drying step d) can be carried out at ambient pressure or at reduced pressure. Preferably, the drying is carried out at ambient pressure.

Thus, optional drying step d) is preferably carried out at a temperature in the range from 60 to 180°C at ambient pressure. For example, optional drying step d) is carried out at a temperature in the range from 50 to 150°C, preferably from 60 to 120°C and more preferably from 80 to 120°C at ambient pressure.

Preferably, method steps a) to c) are carried out in the absence of water or an organic solvent and thus the method of the present invention is free of method step d).

The resulting surface treated filler material product obtained according to the present invention is a coarse material.

In particular, the surface treated filler material product comprises
a) at least one calcium carbonate-containing filler material having
   i) a volume median particle size *d*₅₀ value in the range from 5 to 100 µm,
   ii) a top cut (*d*₉₈) in the range from 30 and 500 µm,
b) a treatment layer on the surface of the at least one calcium carbonate-containing filler material comprising at least one surface treatment agent and/or reaction products thereof, wherein the surface treated filler material product comprises the treatment layer in an amount of from 0.1 to 3 wt.-%, based on the total dry weight of the at least one calcium carbonate-containing filler material,
wherein the surface treated filler material product has a residue on a 45 µm sieve measured according to ISO 787/7 of more than 0.5 wt.-%, based on the total weight of the surface treated filler material product.

With regard to the definition of the at least one calcium carbonate-containing filler material, the at least one surface treatment agent, and preferred embodiments thereof, reference is made to the comments provided above when discussing process steps a), b) and c).

It is preferred that the surface treated filler material product is in form of a powder.

In one embodiment of the present invention, the surface treated filler material product is obtainable (or obtained) by the process of the present invention.

Thus, the surface treated filler material product comprises
a) at least one calcium carbonate-containing filler material having
   i) a volume median particle size *d*₅₀ value in the range from 5 to 100 µm,
   ii) a top cut (*d*₉₈) in the range from 30 and 500 µm,
b) a treatment layer on the surface of the at least one calcium carbonate-containing filler material comprising at least one surface treatment agent and/or reaction products thereof, wherein the surface treated filler material product comprises the treatment layer in an amount of from 0.1 to 3 wt.-%, based on the total dry weight of the at least one calcium carbonate-containing filler material,
wherein the surface treated filler material product has a residue on a 45 µm sieve measured according to ISO 787/7 of more than 0.5 wt.-%, based on the total weight of the surface treated filler material product,
wherein the surface treated filler material product is obtainable (or obtained) by a process for preparing a surface treated filler material product, the process comprising at least the steps of:
a) providing at least one calcium carbonate-containing filler material having
   i) a volume median particle size *d*₅₀ value in the range from 5 to 100 µm,
   ii) a top cut (*d*₉₈) in the range from 30 to 500 µm, and
   iii) a residue on a 45 µm sieve measured according to ISO 787/7 of more than 0.5 wt.-%, based on the total weight of the calcium carbonate-containing filler material,
b) providing at least one surface treatment agent being in a molten or liquid state at a temperature ranging from 18 to 45°C,
c) contacting the surface of the at least one calcium carbonate-containing filler material of step a), under mixing, in one or more steps, with the at least one surface treatment agent of step b) such that a treatment layer comprising the at least one surface treatment agent and/or reaction product(s) thereof is formed on the surface of said at least one calcium carbonate-containing filler material of step a),
wherein the obtained surface treated filler material product has a residue on a 45 µm sieve measured according to ISO 787/7 of more than 0.5 wt.-%, based on the total weight of the surface treated filler material product.

The surface treated filler material product thus obtained is advantageously implemented in an article, preferably a polymeric article, comprising at least one polymeric resin and from 1 to 95 wt.-% of the surface treated filler material product.

In a further aspect, the present invention thus refers to an article, preferably polymeric article, comprising the surface treated filler material product. In one embodiment, the article, preferably the polymeric article, comprises at least one polymeric resin and from 1 to 95 wt.-%, based on the total weight of the polymer composition, of the surface treated filler material product. For example, the article, preferably the polymeric article, comprises the surface treated filler material product in an amount of from 5 to 95 wt.-% and preferably from 10 to 85 wt.-%, based on the total weight of the article. For example, the article, preferably the polymeric article, comprises the surface treated filler material product in an amount of from 15 to 80 wt.-%, based on the total weight of the article.

Accordingly, the polymer composition comprises at least one polymeric resin. The polymeric resin represents the backbone of the composition and provides strength, flexibility, toughness and durability to the final article, preferably the polymeric article.

It is appreciated that the at least one polymeric resin according to the present invention is not restricted to a specific resin material as long as the polymer composition is suitable for the preparation of article, preferably the polymeric article.

In one embodiment of the present invention, the at least one polymeric resin is at least one thermoplastic polymer. Thus, it is preferred that the at least one polymeric resin is a thermoplastic polymer selected from the group comprising homopolymers and/or copolymers of polyolefins, polyamides, halogen-containing polymers, polyesters, polyurethanes, and thermosets .

Additionally or alternatively, the at least one polymeric resin is a homopolymer and/or copolymer of a polyolefin. For example, the at least one polymeric resin is a homopolymer and a copolymer of a polyolefin. Alternatively, the at least one polymeric resin is a homopolymer or a copolymer of a polyolefin.

It is appreciated that the at least one polymeric resin is preferably a homopolymer of a polyolefin.

For example, the polyolefin can be polyethylene and/or polypropylene and/or polybutylene. Accordingly, if the polyolefin is polyethylene, the polyolefin is selected from the group comprising homopolymers and/or copolymers of polyethylene like high-density polyethylene (HDPE), medium-density polyethylene (MDPE), low-density polyethylene (LDPE), very low-density polyethylene (VLDPE), linear low-density polyethylene (LLDPE).

For example, the polyolefin is a homopolymer and/or copolymer of polyethylene.

The expression homopolymer of polyethylene used in the present invention relates to polyethylene comprising a polyethylene that consists substantially, i.e. of more than 99.7 wt.-%, still more preferably of at least 99.8 wt.-%, based on the total weight of the polyethylene, of ethylene units. For example, only ethylene units in the homopolymer of polyethylene are detectable.

In case the at least one polymeric resin of the polymer composition comprises a copolymer of polyethylene, it is appreciated that the polyethylene contains units derivable from ethylene as major components. Accordingly, the copolymer of polyethylene comprises at least 55 wt.-% units derivable from ethylene, more preferably at least 60 wt.-% of units derived from ethylene, based on the total weight of the polyethylene. For example, the copolymer of polyethylene comprises 60 to 99.5 wt.-%, more preferably 90 to 99 wt.-%, units derivable from ethylene, based on the total weight of the polyethylene. The comonomers present in such copolymer of polyethylene are C3 to C10 α-olefins, preferably 1-butene, 1-hexene and 1-octene, the latter especially preferred.

Additionally or alternatively, the polyolefin is a homopolymer and/or copolymer of polypropylene.

The expression homopolymer of polypropylene as used throughout the instant invention relates to a polypropylene that consists substantially, i.e. of more than 99 wt.-%, still more preferably of at least 99.5 wt.-%, like of at least 99.8 wt.-%, based on the total weight of the polypropylene, of propylene units. In a preferred embodiment only propylene units are detectable in the homopolymer of polypropylene.

In case the at least one polymeric resin of the polymer composition comprises a copolymer of polypropylene, the polypropylene preferably contains units derivable from propylene as major components. The copolymer of polypropylene preferably comprises, preferably consists of, units derived from propylene and C2 and/or at least one C4 to C10 α-olefin. In one embodiment of the present invention, the copolymer of polypropylene comprises, preferably consists of, units derived from propylene and at least one α-olefin selected from the group consisting of ethylene, 1-butene, 1-pentene, 1-hexene and 1-octene. For example, the copolymer of polypropylene comprises, preferably consists of, units derived from propylene and ethylene. In one embodiment of the present invention, the units derivable from propylene constitutes the main part of the polypropylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polypropylene. The amount of units derived from C2 and/or at least one C4 to C10 α-olefin in the copolymer of polypropylene, is in the range of 1 to 40 wt.-%, more preferably in the range of 1 to 30 wt.-% and most preferably in the range of 1 to 20 wt.-%, based on the total weight of the copolymer of polypropylene.

If the copolymer of polypropylene comprises only units derivable from propylene and ethylene, the amount of ethylene is preferably in the range of 1 to 20 wt.-%, preferably in the range of 1 to 15 wt.-% and most preferably in the range of 1 to 10 wt.-%, based on the total weight of the copolymer of polypropylene. Accordingly, the amount of propylene is preferably in the range of 80 to 99 wt.-%, preferably in the range of 85 to 99 wt.-% and most preferably in the range of 90 to 99 wt.-%, based on the total weight of the copolymer of polypropylene.

Additionally or alternatively, the polyolefin is a homopolymer and/or copolymer of polybutylene.

The expression homopolymer of polybutylene as used throughout the instant invention relates to a polybutylene that consists substantially, i.e. of more than 99 wt.-%, still more preferably of at least 99.5 wt.-%, like of at least 99.8 wt.-%, based on the total weight of the polybutylene, of butylene units. In a preferred embodiment only butylene units are detectable in the homopolymer of polybutylene.

In case the at least one polymeric resin of the polymer composition comprises a copolymer of polybutylene, the polybutylene preferably contains units derivable from butylene as major components. The copolymer of polybutylene preferably comprises, preferably consists of, units derived from butylene and C2 and/or C3 and/or at least one C5 to C10 α-olefin. In one embodiment of the present invention, the copolymer of polybutylene comprises, preferably consists of, units derived from butylene and at least one α-olefin selected from the group consisting of ethylene, 1-propene, 1-pentene, 1-hexene and 1-octene. For example, the copolymer of polybutylene comprises, preferably consists of, units derived from butylene and ethylene. In one embodiment of the present invention, the units derivable from butylene constitutes the main part of the polybutylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polybutylene. The amount of units derived from C2 and/or C3 and/or at least one C5 to C10 α-olefin in the copolymer of polybutylene, is in the range of 1 to 40 wt.-%, more preferably in the range of 1 to 30 wt.-% and most preferably in the range of 1 to 20 wt.-%, based on the total weight of the copolymer of polybutylene.

If the at least one polymeric resin is a homopolymer and/or copolymer of a halogen-containing polymer, the at least one polymeric resin is preferably selected from polyvinylchloride (PVC), polyvinylidene chloride (PVDC), polyvinylidene fluoride (PVDF), polytetrafluoroethylene (PTFE), and copolymers of PVC-polyvinyl acetate and plasticized PVC and copolymers thereof.

If the at least one polymeric resin is a homopolymer and/or copolymer of polyester, the at least one polymeric resin is preferably selected from polyethylene terephthalate (PET), polytrimethylene terephthalate (PTT), polybutylene terephthalate (PBT), polyethylene naphthalate (PEN), but also degradable polyesters, such as polylactic acid (polylactide, PLA).

In one embodiment of the present invention, the at least one polymeric resin is a homopolymer of polyethylene and/or polypropylene and/or polybutylene. For example, the at least one polymeric resin is a homopolymer of polyethylene and polypropylene. Alternatively, the at least one polymeric resin is a homopolymer of polyethylene or polypropylene. In one embodiment of the present invention, the at least one polymeric resin is a homopolymer of polypropylene.

The expression "at least one" polymeric resin means that one or more kinds of polymeric resin may be present in the inventive polymer composition.

Accordingly, it is appreciated that the at least one polymeric resin may be a mixture of two or more kinds of polymeric resins. For example, if the at least one polymeric resin is a mixture of two or more polymeric resins, one polymeric resin is a homopolymer or copolymer of polypropylene, while the second or further polymeric resin is selected from the group comprising homopolymers and/or copolymers of polyethylene, polybutylene, polyamides, polyesters, halogen-containing polymers and mixtures thereof.

In one embodiment of the present invention, the at least one polymeric resin is one kind of polymeric resin. Preferably, the at least one polymeric resin is a homopolymer of polyethylene or polypropylene.

In one embodiment of the present invention, the at least one polymeric resin has a melting temperature Tm of above 100°C, more preferably of above 150°C, like of above 200°C. For example, the melting temperature of the at least one polymeric resin ranges from 100 to 350°C, more preferably ranges from 150 to 325°C, still more preferably ranges form 180 to 260°C, and most preferably ranges from 200 to 300°C.

Furthermore, it is appreciated that the at least one polymeric resin may be selected from polyolefins having a broad spectrum of melt flow rate. In general, it is preferred that the polyolefin has a melt flow rate MFR (190°C) of from 0.1 to 3 000 g/10 min, more preferably of from 0.2 to 2 500 g/10 min. For example, the polyolefin has a melt flow rate MFR (190°C) of from 0.3 to 2 000 g/10 min or from 0.3 to 1 600 g/10 min. Additionally or alternatively, the at least one polymeric resin has a melt flow rate MFR (230°C) of from 0.1 to 3 000 g/10 min, more preferably of from 0.2 to 2 500 g/10 min. For example, the polyolefin has a melt flow rate MFR (230°C) of from 0.3 to 2 000 g/10 min or from 0.3 to 1 600 g/10 min.

For example, if the at least one polymeric resin is a polyolefin being a homopolymer and/or copolymer of polypropylene, it is preferred that the at least one polymeric resin has a melt flow rate MFR (190°C, 2.16 kg) of from 1 to 3 000 g/10 min, more preferably of from 3 to 2 500 g/10 min. For example, the at least one polymeric resin which is a homopolymer and/or copolymer of polypropylene has a melt flow rate MFR (190°C) of from 5 to 2 000 g/10 min or from 10 to 1 600 g/10 min. It is preferred that the at least one polymeric resin which is a homopolymer and/or copolymer of polypropylene has a melt flow rate MFR (230°C) of from 1 to 3 000 g/10 min, more preferably of from 3 to 2 500 g/10 min. For example, the at least one polymeric resin which is a homopolymer and/or copolymer of polypropylene has a melt flow rate MFR (230°C) of from 5 to 2 000 g/10 min or from 10 to 1 600 g/10 min.

If the at least one polymeric resin is a polyolefin being a homopolymer and/or copolymer of polyethylene, it is appreciated that the at least one polymeric resin has a rather low melt flow rate. Accordingly, it is preferred that the at least one polymeric resin which is a homopolymer and/or copolymer of polyethylene has a melt flow rate MFR (190°C) of from 0.5 to 20 g/10 min, more preferably of from 0.7 to 15 g/10 min. For example, the at least one polymeric resin has a melt flow rate MFR (190°C) of from 0.9 to 10 g/10 min or from 0.9 to 5 g/10 min. Additionally or alternatively, the at least one polymeric resin which is a homopolymer and/or copolymer of polyethylene has a melt flow rate MFR (230°C) of from 0.1 to 3 000 g/10 min, more preferably of from 0.2 to 2 500 g/10 min. For example, the at least one polymeric resin which is a homopolymer and/or copolymer of polyethylene has a melt flow rate MFR (230°C) of from 0.3 to 2 000 g/10 min or from 0.3 to 1 600 g/10 min.

In one embodiment of the present invention, the polymer composition comprises the surface treated filler material product in an amount of from 5 to 95 wt.-% and preferably from 10 to 85 wt.-%, based on the total weight of the polymer composition. For example, the polymer composition comprises the surface treated filler material product in an amount of from 15 to 80 wt.-%, based on the total weight of the polymer composition.

### Brief description of the figures

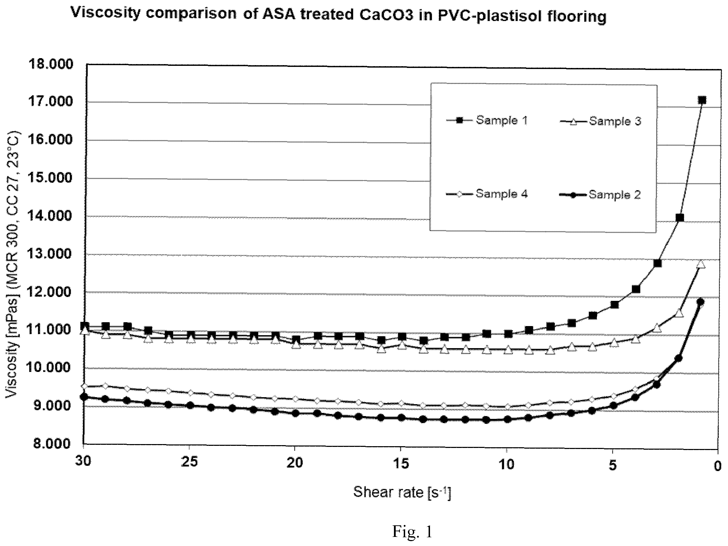

Fig. 1 shows a viscosity comparison of ASA treated CaCO₃ in PVC-plastisol flooring

The following examples may additionally illustrate the invention but are not meant to restrict the invention to the exemplified embodiments.

### EXAMPLES

### A) Measurement methods

The following measurement methods are used to evaluate the parameters given in the examples and claims.

### Particle size distribution (mass % particles with a diameter < X) and weight median diameter (d₅₀) of a particulate material

Volume determined median particle size *d*₅₀(vol) and the volume determined top cut particle size *d*₉₈(vol) was evaluated using a Malvern Mastersizer 2000 Laser Diffraction System (Malvern Instruments Plc., Great Britain). The *d*₅₀(vol) or *d*₉₈(vol) value indicates a diameter value such that 50 % or 98 % by volume, respectively, of the particles have a diameter of less than this value. The raw data obtained by the measurement was analyzed using the Mie theory, with a particle refractive index of 1.57 and an absorption index of 0.005. The methods and instruments are known to the skilled person and are commonly used to determine particle size distributions of fillers and pigments.

### BET specific surface area of a material

Throughout the present document, the specific surface area (in m²/g) of the mineral filler is determined using the BET method (using nitrogen as adsorbing gas), which is well known to the skilled man (ISO 9277:2010). The total surface area (in m²) of the mineral filler is then obtained by multiplication of the specific surface area and the mass (in g) of the mineral filler prior to treatment.

### Amount of surface-treatment layer

The amount of the treatment layer on the calcium carbonate-comprising filler material is calculated theoretically from the values of the BET of the untreated calcium carbonate-containing filler material and the amount of mono-substituted succinic anhydride and the mixture of aliphatic linear or branched carboxylic acids comprising stearic acid that is used for the surface-treatment. It is assumed that 100 % of the mono-substituted succinic anhydride and the mixture of aliphatic linear or branched carboxylic acids comprising stearic acid added to the calcium carbonate-containing filler material are present as surface treatment layer on the surface of the calcium carbonate-containing filler material.

### Tensile tests

The specimens were Typ 1B according to ISO 3167, and tensile tests were performed according to ISO 527, on 15 cm "dog bone shaped specimen". E-modulus and tensile strength, elongation at break tests were performed on a Zwick Roell, Type Z020 equipment according to ISO 527-3.

### Melt flow index

Melt flow index was determined according to ISO 1133 (ASTM D1238), at 190°C and a load of 5 kg or 10 kg, respectively, on a Ceast machine (IT), Type "Melt flow modular line".

### B) Examples

### a) Example 1

This example relates to the preparation of a surface treated filler material product in accordance of the present invention.

For the preparation of the surface treated filler material product, limestone from Orgon, France was wet ground at 25 wt.-% in tap water in a horizontal ball mill (Dynomill) and spray dried. The obtained calcium carbonate-containing filler featured a *d*₅₀ of approximately 6.6 µm, a top cut *d*₉₈ of 49.3 µm, residue on 45 µm sieve of 1,4 wt.-%, and a specific surface area BET of 1.1 m²/g and a residual moisture content of 0.2 wt.-%.

The obtained spray dried calcium carbonate-containing filler material was further treated as outlined in the following tests.

### Test 1 (reference treatment)

The spray dried calcium carbonate-containing filler mineral was continuously fed at a rate of 200 kg/h in a pin mill and treated with liquid alkenylsuccinic anhydride ("ASA", Hydrores AS 1000, CAS number 68784-12-3, commercially available from Kemira Oyj, Vaasa, Finnland) fed at a rate of 6 kg/h in a Contraplex 250 CW pin mill (with disc diameter of 250mm, at a rotational speed of 3 000 revolutions per minute of the door and at a rotational speed of the housing of 6 000 revolutions per minute, and containing 120 pins in the door and 120 pins in the housing one three rows) made by the company HOSOKAWA ALPINE™ (Augsburg, Del.) and at 100°C in order to achieve a surface treatment of 0.3 wt.-%.

### Test 2 (treatment according to the present invention)

The spray dried calcium carbonate-containing filler mineral was continuously fed at a rate of 750 kg/h on a conveying screw of 4 m length and an inclination of 30° via a horizontal conveying screw having a length of 2.8 m. The liquid alkenylsuccinic anhydride ("ASA", Hydrores AS 1000, CAS number 68784-12-3, commercially available from Kemira Oyj, Vaasa, Finnland) was fed at a rate of 22.5 kg/h onto the horizontal conveying screw at ambient temperature of about 25°C. At the end of the inclined conveying screw, the surface treated calcium carbonate-containing filler material product with a surface treatment of 0.3 wt.-% was allowed to drop in a silo.

The size distribution of particles of the feed of tests 1 and 2 were analyzed with Mastersizer 2000 from Malvern Instruments (UK) for the determination of the mean particle size distribution *d*₅₀ and top cut *d*₉₈, and the sieve residue on a 45 µm sieve measured according to ISO 787/7, before and after the treatment according to the reference treatment with a pin mill and according to the present invention, and results are shown in table 1.

**Table 1**

| | Feed (initital spray dried calcium carbonate-containing filler mineral) | Feed (Test 1) | Feed (Test 2) |
|---|---|---|---|
| 0.3 % ASA treated | No | Yes | Yes |
| Treatment method | - | Pin mill | Conveyor screw |
| *d*₉₈ | 49.3 µm | 28.0 µm | 52.9 µm |
| *d*₅₀ | 6.6 µm | 7.8 µm | 6.97 µm |
| Residue 45µm sieve mg/100g | 1387 | 3 | 1474 |

As can be readily seen from table 1, during surface treatment in the pin mill (test 1), the particle size distribution of the feed of calcium carbonate-containing mineral filler is significantly affected. The top cut value *d*₉₈ is almost half of it's initial value, and the median particle size *d*₅₀ is increased by about 20 %, and almost no sieve residue at 45 µm. Compared to the surface treated material according to the present invention (test 2), wherein the median particle size *d*₅₀ only increased by about 5 %, and top cut value slightly increase which might be due to some minor aggregates, also the sieve residue is close to the value of the untreated feed material.

These results show that the surface treatment method according to the present invention does not only consume less energy for its preparation but also does not incure any significant changes of the physical properties of the feed material, and that therefore the surface treated calcium carbonate-containing mineral filler material product, is almost equivalent to the feed material, with the exception that it is surface treated.

### b) Example 2

The surface treated calcium carbonate-containing filler material products of test 1 of example 1, i.e. sample 1 was prepared according to the reference treatment, and of test 2 of example 1, i.e. sample 2 was prepared according to the process of the present invention, were used.

Sample 1 and Sample 2 were incorporated into a PVC-plastisol flooring composition and viscosity measurements were carried out. In addition, non surface treated calcium carbonate-containing filler material (feed) without surface treating agent (sample 3) and non surface treated calcium carbonate-containing filler material (feed) with surface treating agent added separately (sample 4) to the PVC-plastisol flooring composition were added. Viscosities were measured on an Anton Paar (CH), Type MCR 300 rheometer, according to the CC27 method system, using a cylindric system and spindle with 27 mm diameter, 1 mm gap between the spindle and the cylinder, at 23°C, with a 5 min. pre-tempering of the paste at shear rate of 10 sec⁻¹, and 1.) upward slope of 0-30 sec⁻¹ within 120 sec, 2.) constant for 60 sec at 30 sec⁻¹, and 3.) a downward slope of 30-0 sec⁻¹ within 120 sec. Data analysis is based on the values of the downward slope of part 3 of the measurement. The composition of the PVC-plastisol floorings are set out in table 2.

**Table 2**

| | CaCO₃+0.3 wt.-% ASA (sample 1 - reference) 150 phr | CaCO₃+0.3 wt.-% ASA (sample 2 - inventive) 150 phr | CaCO₃(Feed) untreated (sample 3) 150 phr | CaCO₃(Feed) untreated (sample 4) 150 phr |
|---|---|---|---|---|
| E-PVC (Lacovyl PB 1301) | 100 phr | 100 phr | 100 phr | 100 phr |
| DINP* | 75 phr | 75 phr | 75 phr | 75 phr |
| ASA | - | - | - | 0.3 wt.-% into formulation |

| | | | | |
|---|---|---|---|---|
| * Diisononyl Phthalate, CAS 68515-48-0, added as plasticizer | | | | |

Fig. 1 shows the influence of the particle size and surface treating agent on the viscosity of the PVC plastisol flooring composition. The surface treated filler material product obtained by pin mill coating (reference) shows an increase of viscosity as compared to the non-treated CaCO₃. Viscosity is improved when alkenylsuccinic anhydride is added directly to the PVC-plastisol flooring composition. The best viscosity results are obtained when a surface treated filler material product prepared according to the present invention is added to the PVC-plastisol flooring composition.

### c) Example 3

A surface treated calcium carbonate-containing filler material product was prepared according to test 2 of example 1 of the present invention, wherein the surface treatment with ASA was 0.5 wt.-%. The preparation of the samples in S-PVC is set out in table 3 below.

**Table 3**

| Samples | E1 (Reference) | E2 (Inventive) | E3 (Inventive) | E4 (Inventive) |
|---|---|---|---|---|
| | | | | |
| S-PVC (k value 66, Inovyn) | 100 phr | 100 phr | 100 phr | 100 phr |
| DINP* | 30 phr | 30 phr | 30 phr | 30 phr |
| Ca/Zn stabilizer (CZ 2913) | 2.5 phr | 2.5 phr | 2.5 phr | 2.5 phr |
| CaCO₃ (untreated) | 170 phr | | | |
| CaCO₃ (0.5 wt.-% ASA surface treated) | | 170 phr | 180 phr | 190 phr |

| | | | | |
|---|---|---|---|---|
| * Diisononyl Phthalate, CAS 68515-48-0, added as plasticizer | | | | |

E1 is a reference material prepared with uncoated calcium carbonate-containing filler material. E2 to E4 are inventive materials prepared with a surface coated calcium carbonate-containing filler material product according to the present invention, wherein the surface coated calcium carbonate-containing filler material product was added in different amounts.

The sample materials were dryblend mixed in a Thermomix (from Fa. Vorwerk, Germany) for 120 seconds at 120°C and 6000 - 7000 rpm before two-roll mill processing at 170°C. Specimens were cut from pressed sheets performed on a hydraulic press from Collin, type P300P, for conducting tensile tests. Hydraulic pressing was performed on a 2 mm thick metallic frame, 17 cm x 17 cm, with 200 g of roll milled material. Pressing was performed at 170°C, at 200 bar and for 2 min. Thereafter the press was let to cool down at 15°C (water cooling) while pressure was maintained at 200 bar. The test results of the samples in S-PVC are set out in table 4 below.

**Table 4**

| Samples | E1 (reference) | E2 (Inventive) | E3 (Inventive) | E4 (Inventive) |
|---|---|---|---|---|
| | | | | |
| E-modulus [N/mm²] | 766 | 615 | 781 | 626 |
| Tensile strength [N/mm²] | 9.4 | 8.6 | 9.0 | 7.6 |
| Elongation at break [%] | 93 | 104 | 100 | 106 |

The cut specimens for tensile testings were made by a cutting device from Fa. Hans Naef AG (CH). The specimens were Typ 1B according to ISO 3167, and tensile tests were performed according to ISO 527, on 15 cm "dog bone shaped specimen". E-modulus and tensile strength, elongation at break tests were performed on a Zwick Roell, Type Z020 equipment according to ISO 527-3.

Inventive examples E2 to E4 show an overall increased elongation at break behavior over the reference sample, whereas the E-modulus and Tensile strength show a maximum in inventive example E3.

### d) Example 4

A surface treated calcium carbonate-containing filler material product was prepared according to test 2 of example 1 of the present invention, wherein the surface treatment with ASA was 0.5 wt.-%. The preparation of the samples in polyolefins is set out in table 5 below.

**Table 5**

| Samples | E5 (reference) | E6 (Inventive) | E7 (reference) | E8 (Inventive) | E9 (Inventive) |
|---|---|---|---|---|---|
| | (1) | (1) | (2) | (2) | (2) |
| LLDPE* | 15 wt.-% | 15 wt.-% | 7 wt.-% | 7 wt.-% | 6 wt.-% |
| CaCO3 (untreated) | 85 wt.-% | | 75 wt.-% | | |
| CaCO3 (0.5 wt.-% ASA) | | 85 wt.-% | | 75 wt.-% | 80 wt.-% |
| Elastomer ** | | | 14 wt.-% | 14 wt.-% | 11 wt.-% |
| Mineral oil ^{#} | | | 4 wt.-% | 4 wt.-% | 3 wt.-% |

| | | | | | |
|---|---|---|---|---|---|
| *LLDPE (ExxonMobile, LLDPE LL 6101, MFI =20), **Elastomer (Dow, Engage 7270, MFI = 0.8), # Mineral oil (Paraffin oil, VWR Chemicals, viscosity: 69 cSt); (1) PE compounding application, (2) PE heavy layer application | | | | | |

The sample materials were compounded and melt flow index was determined on a Ceast machine (IT), Type "Melt flow modular line", according to ISO 1133 (ASTM D1238), at 190°C and a load of 5 kg or 10 kg respectively. The test results of the samples in polyolefins are set out in table 6 below.

**Table 6**

| | E5 (reference) | E6 (Inventive) | E7 (reference) | E8 (Inventive) | E9 (Inventive) |
|---|---|---|---|---|---|
| MFI (190°C/10 kg) [g/10 min] | 1.2 | 2.8 | | | |
| MFI (190°C/5 kg) [g/10 min] | | | 4.3 | 6.6 | 3.1 |

The melt flow index of the surface treated calcium carbonate-containing mineral filler material product, shows improved or almost similar meltflow index at same or increased filler level.

## Claims

1. A process for preparing a surface treated filler material product, the process comprising at least the steps of:
a) providing at least one calcium carbonate-containing filler material having
i) a volume median particle size *d*₅₀ value in the range from 5 to 100 µm,
ii) a top cut (*d*₉₈) in the range from 30 to 500 µm, and
iii) a residue on a 45 µm sieve measured according to ISO 787/7 of more than 0.5 wt.-%, based on the total weight of the calcium carbonate-containing filler material,
b) providing at least one surface treatment agent being in a molten or liquid state at a temperature ranging from 18 to 45°C,
c) contacting the surface of the at least one calcium carbonate-containing filler material of step a), under mixing, in one or more steps, with the at least one surface treatment agent of step b) such that a treatment layer comprising the at least one surface treatment agent and/or reaction product(s) thereof is formed on the surface of said at least one calcium carbonate-containing filler material of step a),
wherein the obtained surface treated filler material product has a residue on a 45 µm sieve measured according to ISO 787/7 of more than 0.5 wt.-%, based on the total weight of the surface treated filler material product.

2. The process according to claim 1, wherein the calcium carbonate-containing filler material of step a) is selected from the group consisting of ground calcium carbonate, preferably marble, limestone, dolomite and/or chalk, precipitated calcium carbonate (PCC), preferably vaterite, calcite and/or aragonite, surface-reacted calcium carbonate (MCC) and mixtures thereof, more preferably the calcium carbonate-containing filler material is ground calcium carbonate.

3. The process according to claim 1 or 2, wherein the at least one calcium carbonate-containing filler material of step a) has
a) a volume median particle size *d*₅₀ value in the range from 6 to 80 µm, preferably from 7 to 60 µm and most preferably from 7.5 to 50 µm,
b) a top cut (*d*₉₈) in the range from 40 and 400 µm, preferably from 50 to 300 µm, more preferably from 50 to 250 µm, and
c) a residue on a 45 µm sieve measured according to ISO 787/7 in the range from 0.5 to 30 wt.-%, preferably in the range from 0.75 to 25 wt.-%, based on the total weight of the calcium carbonate-containing filler material.

4. The process according to any one of claims 1 to 3, wherein the amount of the residue on a 45 µm sieve measured according to ISO 787/7 of the at least one calcium carbonate-containing filler material of step a) and the residue on a 45 µm sieve measured according to ISO 787/7 of the surface treated filler material product differs by less than 20 wt.-%.

5. The process according to any one of claims 1 to 4, wherein the at least one surface treatment agent of step b) has a Brookfield viscosity of ≤ 1 000 mPa·s at 25°C.

6. The process according to any one of claims 1 to 5, wherein the at least one surface treatment agent of step b) is a phosphoric acid ester blend of one or more phosphoric acid mono-ester and/or one or more phosphoric acid diester, and/or at least one mono-substituted succinic anhydride consisting of succinic anhydride mono-substituted with a group selected from a linear, branched and aliphatic group having a total amount of carbon atoms from at least C2 to C20 in the substituent or a cyclic group having a total amount of carbon atoms from at least C3 to C20 in the substituent; and/or is added in contacting step c) in a total amount of from 0.1 to 3 wt.-%, preferably of from 0.1 to 2 wt.-% and most preferably of from 0.1 to 1.5 wt.-%, based on the total dry weight of the at least one calcium carbonate-containing filler material of step a).

7. The process according to any one of claims 1 to 6, wherein contacting step c) is carried out in that the overall energy intake by adding the at least one surface treatment agent of step b) to the at least one calcium carbonate-containing filler material of step a) is not more than 15 kWh/T, preferably in the range from 2 to 15 kWh/T.

8. The process according to any one of claims 1 to 7, wherein contacting step c) is carried out in an Archimedean screw, e.g. a screw conveyer, a drum mixer, a pneumatic air conveyor system, a planetary mixer or a guedu mixer, preferably the at least one surface treatment agent of step b) is added to the at least one calcium carbonate-containing filler material of step a) which is loaded onto the Archimedean screw, e.g. screw conveyer, the drum mixer, the pneumatic air conveyor system, the planetary mixer or the guedu mixer.

9. The process according to claim 8, wherein the Archimedean screw is operated at an angle ranging from 30 to 80°, and more preferably from 35 to 70°, and/or a temperature ranging from 18 to 45°C.

10. The process according to claim 8 or 9, wherein the at least one surface treatment agent of step b) is added to the at least one calcium carbonate-containing filler material of step a) in the lower 1/3 of the Archimedean screw.

11. The process according to claim 8, wherein the drum mixer, planetary mixer or guedu mixer has a diameter to height ratio of 1:1 to 1:5.

12. The process according to any one of claims 1 to 11, wherein contacting step c) is carried out in that the at least one surface treatment agent of step b) is sprayed onto the at least one calcium carbonate-containing filler material of step a), and/or contacting step c) is carried out in continuous or batch mode.

13. A surface treated filler material product comprising
a) at least one calcium carbonate-containing filler material having
i) a volume median particle size *d*₅₀ value in the range from 5 to 100 µm,
ii) a top cut (*d*₉₈) in the range from 30 and 500 µm,
b) a treatment layer on the surface of the at least one calcium carbonate-containing filler material comprising at least one surface treatment agent and/or reaction products thereof, wherein the surface treated filler material product comprises the treatment layer in an amount of from 0.1 to 3 wt.-%, based on the total dry weight of the at least one calcium carbonate-containing filler material,
wherein the surface treated filler material product has a residue on a 45 µm sieve measured according to ISO 787/7 of more than 0.5 wt.-%, based on the total weight of the surface treated filler material product.

14. The surface treated filler material product according to claim 13, wherein the surface treated filler material product is obtained by a process for preparing a surface treated filler material product according to any one of claims 1 to 12.

15. Article, preferably polymeric article, comprising the surface treated filler material product according to claim 13 or 14.
